(19) **Europäisches Patentamt / European Patent Office / Office européen des brevets**

(11) **EP 4 633 258 A1**

(12) **EUROPEAN PATENT APPLICATION**
published in accordance with Art. 153(4) EPC

(43) Date of publication:
**15.10.2025 Bulletin 2025/42**

(21) Application number: **23921844.9**

(22) Date of filing: **16.02.2023**

(51) International Patent Classification (IPC):
*H04W 64/00* (2009.01)

(52) Cooperative Patent Classification (CPC):
**H04W 64/00**

(86) International application number:
**PCT/CN2023/076452**

(87) International publication number:
**WO 2024/168687 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **ZHANG, Shichang**
  **Dongguan, Guangdong 523860 (CN)**
- **MA, Teng**
  **Dongguan, Guangdong 523860 (CN)**

(74) Representative: **Grassi, Stefano**
**Bugnion S.p.A.**
**Viale Lancetti, 17**
**20158 Milano (IT)**

(54) **SIDELINK COMMUNICATION METHOD AND APPARATUS, AND DEVICE AND STORAGE MEDIUM**

(57) A sidelink communication method and apparatus, and a device and a storage medium, which relate to the technical field of communications. The method comprises: a terminal device sending or receiving a PSCCH, wherein the PSCCH is used for indicating a sending mode of an SL PRS, and a transmission resource and/or a transmission mode of the PSCCH are/is related to a transmission resource of the SL PRS (1210). A plurality of terminal devices can send SL PRSs using different transmission resources, different terminal devices can separately send PSCCHs to indicate sending modes of the SL PRSs sent by themselves, and transmission resources and/or transmission modes of the PSCCHs are related to transmission resources of the SL PRSs, such that the PSCCHs which are sent by the different terminal devices and used for indicating the sending modes of the SL PRSs can be multiplexed, thereby reducing mutual interference between the PSCCHs sent by the different terminal devices, and ensuring the reception of the SL PRSs by a receiving end, and thus improving the positioning accuracy.

1210

A terminal device sends or receives a PSCCH. The PSCCH is used to indicate a sending mode of an SL PRS, and a transmission resource and/or a transmission mode of the PSCCH are/is related to a transmission resource of the SL PRS

**FIG. 12**

EP 4 633 258 A1

**Description**

TECHNICAL FIELD

Embodiments of this application relate to the technical field of communication, in particular to a method and apparatus for sidelink communication, a device, and a storage media.

BACKGROUND

With the development of sidelink (SL) communication technology, SL-based positioning technology has been introduced. In the SL-based positioning technology, a SL positioning reference signal (SL PRS) needs to be transmitted between the terminal devices of SL communication, and the transmission mode of the SL PRS may be indicated through a physical sidelink control channel (PSCCH).

With the evolution of technology, further research is still required for the SL-based positioning technology.

SUMMARY

Embodiments of the disclosure provide a method and apparatus for sidelink communication, a device, and a storage media. The technical solutions are as follows.

According to an aspect in embodiments of the disclosure, there is provided a method for sidelink communication. The method is performed by a terminal device, and includes the following operation.

A physical sidelink control channel (PSCCH) is sent or received. The PSCCH is used to indicate a sending mode of a sidelink positioning reference signal (SL PRS), and a transmission resource and/or a transmission mode of the PSCCH are/is related to a transmission resource of the SL PRS.

According to an aspect in embodiments of the disclosure, there is provided an apparatus for sidelink communication. The apparatus includes a transmission module.

The transmission module is configured to send or receive a PSCCH. The PSCCH is used to indicate a sending mode of a SL PRS, and a transmission resource and/or a transmission mode of the PSCCH are/is related to a transmission resource of the SL PRS.

According to an aspect in embodiments of the disclosure, a terminal device is further provided. The terminal device includes a memory for storing a computer program; and a processor for executing the computer program to implement the method for sidelink communication described above.

According to an aspect in embodiments of the disclosure, a computer-readable storage medium having stored therein a computer program is further provided. The computer program is configured to be executed by a processor to implement the method for sidelink communication described above.

According to an aspect in embodiments of the disclosure, a chip including programmable logic circuits and/or program instructions is further provided. When the chip is in operation, the programmable logic circuits and/or program instructions are used to implement the method for sidelink communication described above.

According to an aspect in embodiments of the disclosure, a computer program product including computer instructions is further provided. The computer instructions are stored in a computer-readable storage medium. A processor reads and executes the computer instructions from the computer-readable storage medium to implement the method for sidelink communication described above.

The technical solutions provided in the embodiments of the disclosure may include the following beneficial effects.

In the SL-based positioning, multiple terminal devices may send SL PRSs using different transmission resources, different terminal devices may separately send PSCCHs to indicate sending modes of the SL PRSs sent by themselves. The transmission resource and/or the transmission mode of the PSCCH are/is related to transmission resources of the SL PRSs. As a result, the PSCCHs which are sent by the different terminal devices and used to indicate the sending modes of the SL PRSs may be multiplexed, thereby reducing mutual interference between the PSCCHs sent by the different terminal devices, ensuring the reception of the SL PRSs by the terminal devices at the receiving terminal, and thus improving the positioning accuracy.

BRIEF DESCRIPTION OF THE DRAWINGS

FIG. 1 is a schematic diagram of network architecture according to an embodiment of the disclosure.
FIG. 2 is a schematic diagram illustrating the use of a part of symbols in a slot for SL transmission according to an embodiment of the disclosure.

FIG. 3 is a schematic diagram of the slot structure of the PSCCH and the physical sidelink shared channel (PSSCH) according to an embodiment of the disclosure.

FIG. 4 is a schematic diagram of the time domain positions of 4 demodulation reference signal (DMRS) symbols when the number of the PSSCH symbols is 13 according to an embodiment of the disclosure.

FIG. 5 is a schematic diagram of the frequency domain position of PSSCH DMRS according to an embodiment of the disclosure.

FIG. 6 is a schematic diagram of the resource pool of the PSCCH and the PSSCH in new radio vehicle-to-everything (NR-V2X) according to an embodiment of the disclosure.

FIG. 7 is a schematic diagram of the slot structure of the NR system according to an embodiment of the disclosure.

FIG. 8 is a schematic diagram of a comb size and a resource element (RE) offset according to an embodiment of the disclosure.

FIG. 9 is a schematic diagram of interlaced resource blocks (IRBs) according to an embodiment of the disclosure.

FIG. 10 is a schematic diagram of an IRB-based frame structure according to an embodiment of the disclosure.

FIG. 11 is a schematic diagram of resource block sets (RB sets) according to an embodiment of the disclosure.

FIG. 12 is a flowchart of a method for sidelink communication according to an embodiment of the disclosure.

FIG. 13 is a schematic diagram of the resource occupation of the PSCCH and the SL PRS within a SL PRS time domain resource according to an embodiment of the disclosure.

FIG. 14 is a schematic diagram of REs occupied by DMRSs within a RB according to an embodiment of the disclosure.

FIG. 15 is a schematic diagram of the resource occupation of the PSCCH and the SL PRS within a SL PRS time domain resource according to another embodiment of the disclosure.

FIG. 16 is a schematic diagram of the resource occupation of the PSCCH and the SL PRS within a SL PRS time domain resource according to yet another embodiment of the disclosure.

FIG. 17 is a schematic diagram of the resource occupation of the PSCCH and the SL PRS within a slot according to an embodiment of the disclosure.

FIG. 18 is a schematic diagram of the resource occupation of the PSCCH and the SL PRS within a slot according to another embodiment of the disclosure.

FIG. 19 is a schematic diagram of the resource occupation of the PSCCH and the SL PRS within a slot according to yet another embodiment of the disclosure.

FIG. 20 is a block diagram of an apparatus for sidelink communication according to an embodiment of the disclosure.

FIG. 21 is a schematic structural diagram of a terminal device according to an embodiment of the disclosure.

DETAILED DESCRIPTION

To provide a clearer understanding of the objectives, technical solutions, and advantages of the disclosure, the embodiments of the disclosure will be described in further detail with reference to the accompanying drawings.

The network architecture and business scenarios described in the embodiments of the disclosure are intended to illustrate the technical solutions of the embodiments of the disclosure more clearly, and do not constitute limitations on the technical solutions of the embodiments of the disclosure. It is understood by those of ordinary skilled in the art that, with the evolution of the network architectures and the emergence of new business scenarios, the technical solutions of the embodiments of the disclosure are equally applicable to similar technical problems.

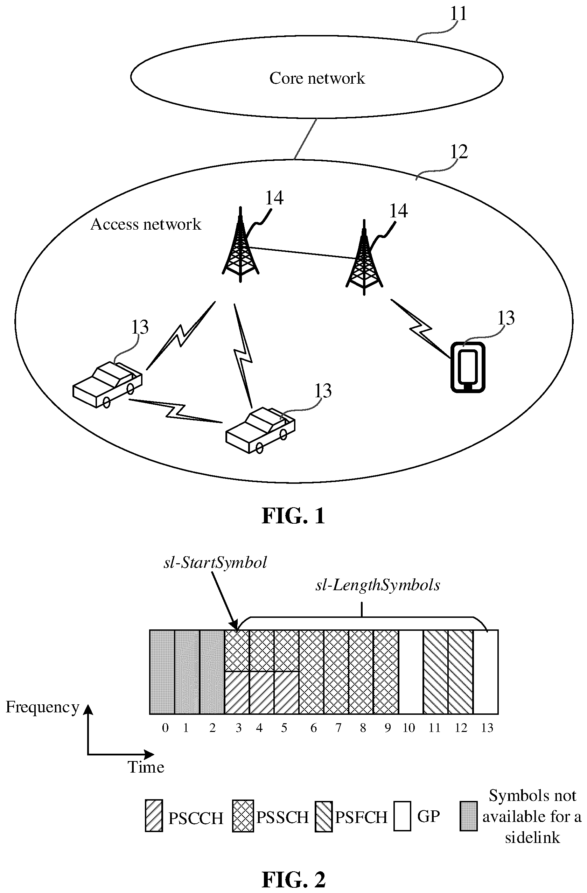

Referring to FIG. 1, it illustrates a schematic diagram of network architecture according to an embodiment of the disclosure. The network architecture may include a core network 11, an access network 12, and a terminal device 13.

The core network 11 includes several core network devices. The primary functions of the core network device are to provide user connection, user management, and service bearer capabilities, serving as a bearer network to provide interfaces to external networks. For example, the core network in a 5th Generation (5G) New Radio (NR) system may include devices such as an access and mobility management function (AMF) entity, a user plane function (UPF) entity, and a session management function (SMF) entity.

The access network 12 includes several access network devices 14. The access network in the 5G NR system may be referred to as a new generation-radio access network (NG-RAN). The access network device 14 is a device deployed in the access network 12 to provide wireless communication function for the terminal device 13. The access network device 14 may include various forms of macro base stations, micro base stations, relay stations, access points, and the like. In systems employing different radio access technologies, the names of devices with the functionality of the access network device may be different. For example, in the 5G NR system, the devices are referred to as gNodeB or gNB. With the evolution of communication technology, the name "access network device" may change. For convenience of description, the above-mentioned devices that provide wireless communication function for the terminal device 13 are collectively referred to as access network device in the embodiments of the disclosure.

There are typically multiple terminal devices 13, with one or more terminal devices 13 distributed within the cell managed by each access network device 14. The terminal device 13 may include various handheld devices, vehicle-mounted devices, wearable devices, computing devices, or other processing devices connected to a wireless modem, that have wireless communication capabilities, various forms of user equipment (UE), mobile stations (MSs), and the like. For convenience of description, the above-mentioned devices are collectively referred to as a terminal device. The access network device 14 and the core network device communicate with each other through a certain over-the-air technology, such as the NG interface in the 5G NR system. The access network device 14 and the terminal device 13 communicate with each other through a certain over-the-air technology, such as a Uu interface. The "terminal device" in embodiments of the disclosure may also be referred to as UE, both terms having the same meaning.

A terminal device 13 may communicate with another terminal device 13 (for example, a vehicle-mounted device and other devices (for example, other vehicle-mounted devices, mobile phones, road side units (RSU), etc.) through a direct communication interface (for example, a PC5 interface). Accordingly, the communication link established based on the direct communication interface may be referred to as a direct link or SL. The SL transmission is direct transmission of communication data between terminal devices via SL. Unlike the traditional cellular system, where communication data is received or sent via an access network device, the SL transmission has the characteristics of short time-delay, low overhead and the like, which is suitable for communication between two terminal devices in close geographical proximity (such as a vehicle-mounted device and other peripheral devices in close geographical proximity). It should be noted that, in FIG. 1, the SL technology is exemplified solely by vehicle-to-vehicle communication within the vehicle to everything (V2X) scenario. However, it is applicable to scenarios where direct communication between various terminal devices is required. In other words, the terminal device in the disclosure is any device that uses the SL technology to communicate.

The "5G NR system" in the embodiments of the disclosure may also be referred to as a "5G system" or a "NR system", but those skilled in the art may understand its meaning. The technical solutions described in the embodiments of the disclosure may be applied to the 5G NR system, as well as to its subsequent evolutionary systems.

Before introducing the technical solution of the disclosure, some background technical knowledge related to the disclosure will be introduced and explained. The following related technologies, as an alternative solution, may be arbitrarily combined with the technical solutions in the embodiments of the disclosure, all of which belong to the protection scope of the embodiments of the disclosure. The embodiments of the disclosure include at least some of the following contents.

1. Slot structure in the NR-V2X

In the NR-V2X, the PSSCH and its associated PSCCH are transmitted in a same slot, and the PSCCH occupies two or three time domain symbols. The time domain resources of the NR-V2X are allocated at the granularity of slot. The starting point and length of time domain symbols in a slot for SL transmission are configured through the parameters *sl-startSLsymbols* and *sl-lengthSLsymbols,* respectively. The last symbol among these time domain symbols is used as a guard period (GP), and the PSSCH and the PSCCH can only use the remaining time domain symbols. However, if physical sidelink feedback channel (PSFCH) transmission resource is configured in a slot, the PSSCH and the PSCCH cannot occupy a time domain symbol for PSFCH transmission, as well as the preceding automatic gain control (AGC) and GP symbols.

As illustrated in FIG. 2, the network configures *sl-StartSymbol*=3, *sl-LengthSymbols*= 11, that is, 11 time domain symbols starting from symbol index 3 in a slot may be used for SL transmission. There is PSFCH transmission resource in the slot, the PSFCH occupies symbol 11 and symbol 12, the symbol 11 is used as the AGC symbol for the PSFCH, and symbols 10, 13 are used as the GP, respectively. The time domain symbols available for the PSSCH transmission are from symbol 3 to symbol 9, the PSCCH occupies three time domain symbols, namely symbol 3, symbol 4 and symbol 5, and symbol 3 is usually used as the AGC symbol.

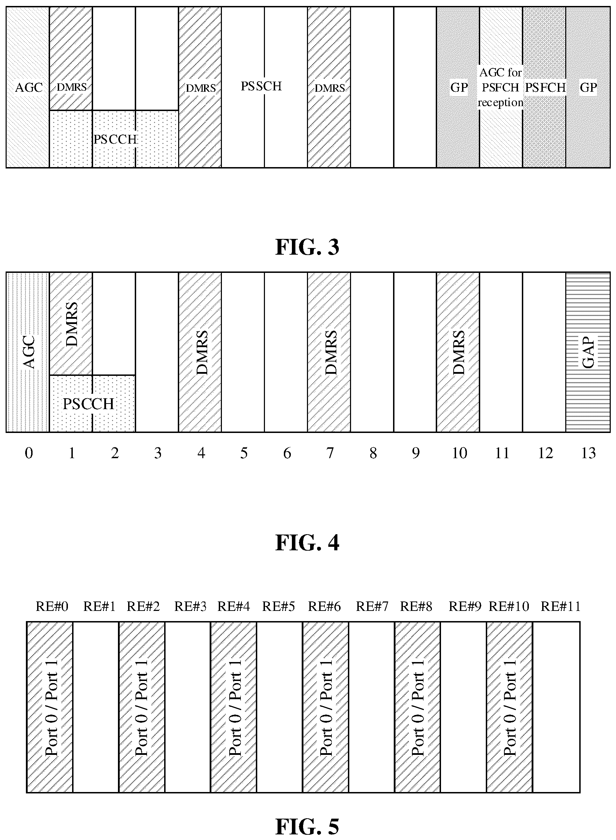

In the NR-V2X, in addition to the PSCCH and the PSSCH, the PSFCH may also be in a SL slot, as illustrated in FIG. 3. It can be seen that in a slot, the first orthogonal frequency division multiplexing (OFDM) symbol is fixed allocated for AGC, and on the AGC symbol, the UE replicates the information sent on the second symbol. The last symbol in the slot is used for send-to-receive (or receive-to-send) switching, allowing the UE to switch from a sending (or receiving) state to a receiving (or sending) state. In the remaining OFDM symbols, the PSCCH may occupy two or three OFDM symbols starting from the second SL symbol. In the frequency domain, the number of physical resource blocks (PRBs) occupied by the PSCCH is within the sub-band range of a PSSCH. If the number of PRBs occupied by the PSCCH is smaller than the size of a sub-channel of the PSSCH, or the frequency domain resource of the PSSCH includes multiple sub-channels, the PSCCH may be frequency division multiplexed with the PSSCH on the OFDM symbols occupied by the PSCCH.

In the SL communication system, when the UE autonomously performs resource selection or determines resource to be sent based on SL resource scheduling by the network, both scenarios may result in different UEs sending the PSCCH on the same time-frequency resource. In order to ensure that the receiving terminal may detect at least one PSCCH in the case of PSCCH resource conflict, LTE-V2X adopts a design scheme that randomizes the PSCCH DMRS. Specifically, when sending the PSCCH, the UE may randomly select one value from {0, 3, 6, 9} as the cyclic shift for the DMRS. When the multiple UEs adopt different cyclic shifts for the PSCCH DMRSs sent on the same time-frequency resource, the receiving terminal UE may still detect at least one PSCCH through orthogonal DMRSs. For the same purpose, three frequency domain orthogonal covering codes (OCCs) for the PSCCH DMRS are introduced into the NR-V2X for random selection by the sending terminal UE. As shown in Table 1, the i-th bit of the OCC code is applied to the i-th DMRS RE in the RB, achieving the effect of distinguishing different UEs.

Table 1: OCC code for the PSCCH DMRS

| Index of OCC code | OCC code | | |
|---|---|---|---|
| | $i = 0$ | $i=1$ | $i = 2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

In the NR-V2X, the DMRS of the PSSCH draws inspiration from the design in the NR Uu interface, adopting the multiple time domain PSSCH DMRS patterns. In a resource pool, the number of available DMRS patterns is related to the number of the PSSCH symbols in the resource pool. For a specific number of the PSSCH symbols (including the first AGC symbol) and the number of the PSCCH symbols, the available DMRS pattern and the position of each DMRS symbol in the pattern are illustrated in Table 2. A schematic diagram of the time domain positions of 4 DMRS symbols when the number of the PSSCH symbols is 13 is illustrated in FIG. 3.

Table 2: Number and position of DMRS symbols under different numbers of PSSCH symbols and PSCCH symbols

| Number of PSSCH symbols (including the first AGC symbol) | Position of DMRS symbols (relative to position of the first AGC symbol) | | | | | |
|---|---|---|---|---|---|---|
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1,5,9 | 1, 4, 7, 10 | 4, 10 | 1,5,9 | 1, 4, 7, 10 |
| 12 | 3, 10 | 1,5,9 | 1, 4, 7, 10 | 4, 10 | 1,5,9 | 1, 4, 7, 10 |
| 13 | 3, 10 | 1, 6, 11 | 1, 4, 7, 10 | 4, 10 | 1, 6, 11 | 1, 4, 7, 10 |

If multiple time domain DMRS patterns are configured in the resource pool, the specific time domain DMRS pattern adopted is selected by the sending terminal UE and indicated in the first-order sidelink control information (SCI). Such a design allows a high-speed moving UE to select a high-density DMRS pattern, thereby ensuring the accuracy of channel estimation, while for a low-speed moving UE, a low-density DMRS pattern may be adopted, thereby improving the spectral efficiency.

The generation manner of PSSCH DMRS sequence is almost identical to that of PSCCH DMRS sequence, with the only difference that initialization parameter of pseudorandom sequence $c(m)$ is $c_{init}$, $N_{ID} = \sum_{i=0}^{L-1} p_i \cdot 2^{L-1-i}$ is used to determine $c_{init}$, where $p_i$ is the $i$-th bit cyclic redundancy check (CRC) of the PSCCH scheduling the PSSCH, and L=24, L is the number of bits of the PSCCH CRC.

Two frequency domain DMRS patterns, namely DMRS frequency domain type 1 and DMRS frequency domain type 2, are supported in the NR PDSCH and physical uplink shared channel (PUSCH). For each frequency domain type, there are two different types of single-symbol DMRS and double-symbol DMRS. The single-symbol DMRS frequency domain type 1 supports 4 DMRS ports, and the single-symbol DMRS frequency domain type 2 may support 6 DMRS ports. In the case of double-symbol DMRS, the number of supported ports is doubled. However, in the NR-V2X, since the PSSCH only needs to support a maximum of two DMRS ports, only the single-symbol DMRS frequency domain type 1 is supported, as illustrated in FIG. 5.

2. Determination of frequency domain resources of the NR-V2X

Similar to the LTE-V2X, the frequency domain resources of the NR-V2X resource pool are also consecutive, and the frequency domain resources are allocated at the granularity of sub-channel. The number of PRBs included in one sub-channel is one of {10, 12, 15, 20, 50, 75, 100}, and the size of the minimum sub-channel is 10 PRBs, which is much larger than the size of the minimum sub-channel of 4 PRBs in LTE-V2X. This is mainly because, in the NR-V2X, the frequency domain resources of the PSCCH are located within the first sub-channel of its associated PSSCH. The size of frequency domain resources of the PSCCH is smaller than or equal to the size of one sub-channel of the PSSCH. However, the time domain resources of the PSCCH occupy 2 or 3 OFDM symbols, if the size of sub-channel is configured to be relatively small, it will result in limited available resources for the PSCCH, leading to an increased code rate and a degradation in the detection performance of the PSCCH. In the NR-V2X, the size of the sub-channel of the PSSCH is configured independently from the size of the frequency domain resources of the PSCCH, and it is necessary to ensure that the size of the frequency domain resources of the PSCCH is smaller than or equal to the size of the sub-channel of the PSSCH. The following configuration parameters in the NR-V2X resource pool configuration information are used to determine frequency domain resources of the PSCCH resource pool and the PSSCH resource pool:

- a size of a sub-channel (sl-SubchannelSize): indicates the number of consecutive PRBs included in a sub-channel in the resource pool, and the value is one of {10, 12, 15, 20, 50, 75, 100} PRBs;
- number of sub-channels (sl-NumSubchannel): indicates the number of sub-channels included in the resource pool;
- an index of starting RB for sub-channel (sl-StartRB-Subchannel): indicates index of starting PRB of the first sub-channel in the resource pool;
- number of PRBs (sl-RB-Number): indicates the number of consecutive PRBs included in the resource pool; and
- a PSCCH frequency domain resource indication (sl-FreqResourcePSCCH): indicates the size of the frequency domain resources of the PSCCH, and the value is one of {10, 12, 15, 20, 25} PRBs.

When the UE determines a resource pool for the sending or reception of the PSSCH, the frequency domain resources included in the resource pool are sl-NumSubchannel consecutive sub-channels starting from the PRB indicated by sl-StartRB-Subchannel. If the number of PRBs included in the final consecutive sl-NumSubchannel sub-channels is less than the number of PRBs indicated by sl-RB-Number, the remaining PRBs cannot be used for the sending or reception of the PSSCH.

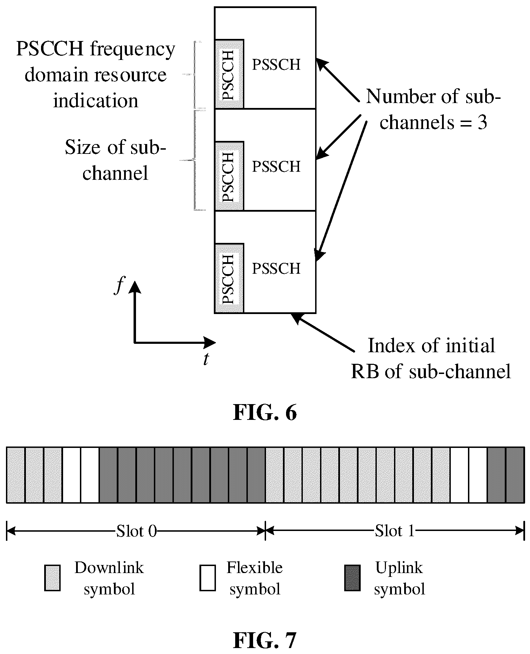

In the NR-V2X, the PSCCH is aligned with the frequency domain starting position of the first sub-channel of its associated PSSCH, so that the starting position of each sub-channel of the PSSCH is a possible frequency domain starting position of the PSCCH. The frequency domain ranges of the PSCCH resource pool and the PSSCH resource pool may be determined based on the above parameters, as illustrated in FIG. 6.

In the NR-V2X, the PSCCH is used to carry SL control information related to resource listening, and includes:

- a priority scheduled for transmission;
- a frequency domain resource allocation, indicating the number of frequency domain resources of the PSSCH within the current slot scheduled by the PSCCH, and the number and a starting position of frequency domain resources of at most two reserved retransmission resources;
- a time domain resource allocation, indicating a time domain position of at most two retransmission resources;
- a reference signal pattern of the PSSCH;
- a second-order SCI format;
- a second-order SCI code rate offset;
- number of PSSCH DMRS ports;
- modulation and coding scheme (MCS);
- a MCS form indication;
- number of PSFCH symbols;
- resource reservation periodicity, reserving resources for sending another transport block (TB) at the next periodicity. If the resource reservation between TBs is not activated in the resource pool configuration, the information bit field does not exist; and
- reserved bits: 2 to 4 bits, the specific number of bits is configured by the network or pre-configured.

Since the PSCCH is always sent within a slot along with the scheduled PSSCH, and the starting position of the PRB occupied by the PSCCH is the starting position of the first sub-channel of the scheduled PSSCH, a time frequency domain starting position of the scheduled PSSCH is not explicitly indicated in the SCI format 1-A.

3. Determination of time domain resources (slots) of the NR-V2X

In the NR-V2X, the transmission of PSCCH/PSSCH is performed at a slot level. That is to say, only one PSCCH/PSSCH may be transmitted in a slot, and it does not support the transmission of multiple PSCCH/PSSCH in a slot in the form of time division multiplexing (TDM). PSCCH/PSSCH between different users may be multiplexed in a slot in the form of frequency division multiplexing (FDM). The time domain resources of the PSSCH in the NR-V2X is at the granularity of slot, but unlike the LTE-V2X where the PSSCH occupies all the time domain symbols in a sub-frame, the PSSCH in the NR-V2X may occupy partial symbols in a slot. This is mainly because in the LTE system, uplink (UL) transmission or downlink (DL) transmission is at the granularity of sub-frame. Therefore, the SL transmission is also at the granularity of sub-frame (special sub-frames in a time division duplex (TDD) system are not used for SL transmission). In the NR system, a flexible slot structure is adopted. That is to say, both UL symbols and DL symbols are included in a slot, thereby achieving more flexible scheduling and reducing the time-delay. The sub-frame of a typical NR system is illustrated in FIG. 7. The DL symbols, the UL symbols, and the flexible symbols may be included in a slot. The DL symbols are located at the starting position of the slot, the UL symbols are located at the ending position of the slot, the flexible symbols are between the DL symbols and the UL symbols, and the number of various symbols in each slot is configurable.

SL transmission system may share a carrier with the cellular system, in which case the SL transmission may only use the UL transmission resources of the cellular systems. For the NR-V2X, if the SL transmission still needs to occupy all time domain symbols in a slot, the network needs to configure the slot with all UL symbols for the SL transmission, which will have a great impact on the UL and DL data transmission of the NR system and reduce the performance of the system. Therefore, in the NR-V2X, partial time domain symbols in a slot are supported for SL transmission. That is to say, partial UL symbols in a slot are used for the SL transmission. In addition, considering that AGC symbols and GP symbols are included in the SL transmission, if the number of UL symbols available for the SL transmission is limited, and after removing the AGC symbols and the GP symbols, the remaining symbols available for transmitting valid data become even fewer, resulting in very low resource utilization efficiency. Therefore, the SL transmission occupies at least 7 time domain symbols (including the GP symbols) in the NR-V2X. When the SL transmission system uses a dedicated carrier, there is no problem of sharing transmission resources with other systems, and all symbols in a slot may be configured for the SL transmission.

As mentioned above, in the NR-V2X, the starting point and length of time domain symbols within a slot used for the SL transmission are configured through parameters such as a starting symbol position (*sl-StartSymbol*) and number of symbols (*sl-LengthSymbols*). The last symbol among the time domain symbols used for the SL transmission is used as the GP. The PSSCH and the PSCCH may only use the remaining time domain symbols. However, if the PSFCH transmission resources are configured in a slot, the PSSCH and the PSCCH must not occupy the time domain symbols used for the PSFCH transmission, as well as the preceding AGC and GP symbols.

In the NR-V2X system, the time domain resources of the resource pool are also indicated by a bitmap. Considering the flexible slot structure in the NR system, the length of the bitmap is also extended, and the supported length of the bitmap is [10: 160]. The method of using the bitmap to determine the slot position belonging to the resource pool within a system frame number (SFN) periodicity is the same as that in the LTE-V2X. However, there are the following two differences.

- The total number of slots included in an SFN periodicity is $10240 \times 2^{\mu}$, where the parameter $\mu$ is related to the size of the sub-carrier spacing.
- A slot cannot be used for the SL transmission if at least one of time domain symbols $Y, Y+1, Y+2, ..., Y+X-1$ included in the slot is not configured as the UL symbol by TDD-UL-DL-ConfigCommon signaling of the network. Y and X indicate *sl-StartSymbol* and *sl-LengthSymbols,* respectively.

Specifically, it includes the following operations.

- In operation 1, in the SFN periodicity, slots that do not belong to the resource pool are removed, including synchronous slots and slots unavailable for the SL transmission. The remaining slots are denoted as a remaining slot set, and the remaining slots are renumbered as $(l_0, l_1, \cdots, l_{(100240 \times 2^{\mu} - N_{S\_SSB} - N_{nonSL} - 1)})$.
  Where,

  $N_{S\_SSB}$ indicates the number of synchronous slots in an SFN periodicity. The synchronization slots are determined based on synchronization-related configuration parameters, which are related to the periodicity of transmitting the synchronization signal block (SSB), Synchronization Signal Block) and the number of transmission resources of the SSB configured in the periodicity.
  $N_{nonSL}$ indicates the number of slots that do not conform to the configuration of the starting point and number of UP symbols in an SFN periodicity. A slot cannot be used for the SL transmission if at least one of time domain symbols $Y, Y+1, Y+2, ..., Y+X-1$ included in the slot is not semi-statically configured as the UL symbol, where Y and X represent *sl-StartSymbol* and *sl-LengthSymbols,* respectively.

- In operation 2, the number of reserved slots and the corresponding time domain positions are determined.

  If the number of slots in the remaining slot set cannot be evenly divided by the length of the bitmap, it is necessary to determine the number of reserved slots and the corresponding time domain positions. Specifically, a slot $l_r$ ($0 \leq r < 10240 \times 2^\mu$ - $N_{S\_SSB}$ - $N_{nonSL}$) is a reserved slot if it meets the following conditions.

$$r = \left\lfloor \frac{m \cdot (10240 \times 2^\mu - N_{S\_SSB} - N_{nonSL})}{N_{reserved}} \right\rfloor$$

  Where $N_{reserved}$ = ($10240 \times 2^\mu$ - $N_{S\_SSB}$ - $N_{nonSL}$) *mod* $L_{bitmap}$ indicates the number of reserved slots, and $L_{bitmap}$ indicates the length of the bitmap, m = 0,...,$N_{reserved}$ - 1.

- In operation 3, the reserved slots are removed from the remaining slot set, and the resultant slot set is denoted as a logical slot set. The slots in the logical slot set are the slots available for the resource pool. The slots in the logical slot set are renumbered as $\left( t_0^{SL}, t_1^{SL}, \ldots, t_{T_{max}-1}^{SL} \right)$, where $T_{max}$ = $10240 \times 2^\mu$ - $N_{S\_SSB}$ - $N_{nonSL}$ - $N_{reserved}$.

- In operation 4, the slots in the logical slot set that belong to the resource pool are determined based on the bitmap. The bitmap in the resource pool configuration information is ($b_0,b_1,...,b_{L_{bitmap}-1}$). For the slots $t_k^{SL}$ ($0 \leq k < (10240 \times 2^\mu$ - $N_{S\_SSB}$ - $N_{nonSL}$ - $N_{reserved}$)) in the logical slot set, when $b_{k'}$, = 1 is satisfied, the slot is a slot belonging to the resource pool, where $k'$ = $k \ mod \ L_{bitmap}$.

- In operation 5, the slots determined in the operation 4 that belong to the resource pool are renumbered sequentially as $t_i'^{SL}$, $i \in \{0, 1, ...,T'_{max}$ - 1\}, where $T'_{max}$ indicates the number of slots included in the resource pool.

4. DL-based positioning

In the DL-based positioning, a UE may be provided with DL PRS configurations for at most four positioning frequency layers. The parameter structure of each positioning frequency layer provides the following configuration parameters for the PRS signal:

- a sub-carrier spacing of the PRS signal;
- a cyclic prefix (CP) length of the PRS signal;
- a frequency domain resource bandwidth of the PRS: the value of this parameter is the number of physical resource blocks (PRBs for short) allocated to the PRS signal. The minimum value of the PRS resource bandwidth is 24 PRBs, with a granularity of 4 PRBs, while the maximum value is 272 PRBs;
- a frequency domain starting frequency position of the PRS resources: this parameter defines the index number of the starting PRB for the allocation of the PRS signal in the frequency domain. The index number of the PRB is defined with respect to PointA of the PRS;
- a frequency domain reference point PointA of the PRS signal; and
- a comb size Comb-N of the PRS signal.

The above PRS parameters configured in each positioning frequency layer are applied to all PRS resources included in the positioning frequency layer. That is to say, in a positioning frequency layer, all PRS signals from multiple different transmit receive points (TRPs) will use the same sub-carrier spacing and CP length, the same comb size, and be sent on the same frequency sub-band and occupy exactly the same bandwidth. Such a design may support the UE to simultaneously receive and measure PRS signals from multiple different TRPs at the same frequency point.

The parameters of the TRP layer include an ID parameter for uniquely identifying the positioning TRP, the physical cell ID of the TRP, the NR cell global identifier (NCGI) of the TRP and the absolute radio frequency channel number (ARFCN) of the TRP. At most two DL PRS resource sets may be configured in each TRP layer. The parameters of this layer of DL PRS resource set are configured with the following parameters, and these parameters will be applied to all DL PRS resources contained in this resource set:

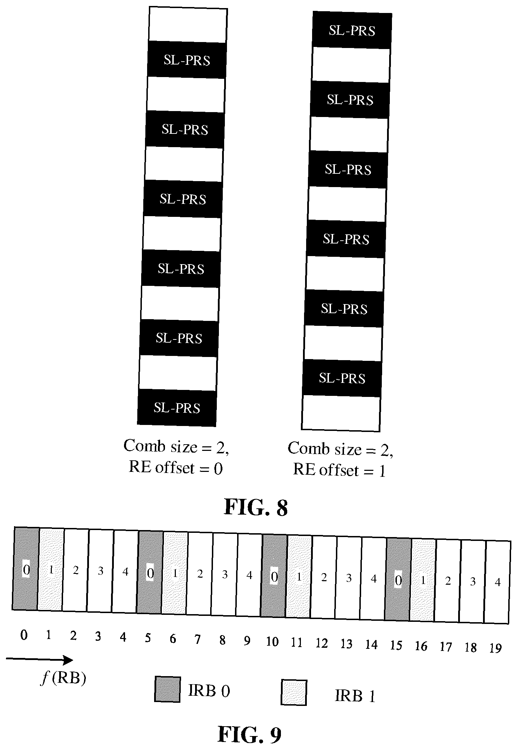

- a DL PRS resource set identification ID (*nr-DL-PRS-ResourceSetID*);
- a transmission periodicity and slot offset of the DL PRS (*dl-PRS-Periodicity-and-ResourceSetSlotOffset*). This parameter defines the time domain sending behavior of all DL PRS resources contained in the DL PRS resource set. The minimum value of the transmission periodicity of the DL PRS that may be configured is 4 ms, while the maximum value is 10240 ms. The configuration of the DL PRS supports flexible sub-carrier spacing, including 15 KHz, 30 KHz, 60 KHz and 120 KHz. The range of the transmission periodicity values of the DL PRS that may be configured is the same under different sub-carrier spacings. FIG. 8 illustrates the schematic diagram for a comb size of 2 with RE offsets of 0 and 1;

- a repetition factor of the DL PRS resource (*dl-PRS-ResourceRepetitionFactor*): this parameter defines the number of repeated transmissions of a PRS resource in each PRS periodicity. The repeated transmission of the same DL PRS resource may be used by the UE to aggregate the DL PRS signal energy transmitted multiple times, thereby increasing the coverage distance of the DL PRS and improving the positioning accuracy. In the FR2 system, the repeated transmission of the DL PRS resource may be used by the UE for a receive beam scanning operation. The UE may receive the repeated transmission of the same DL PRS resource with different receive beams, in order to determine the optimal matching between the TRP send beam and the UE receive beam. On the other hand, the repeated sending of the DL PRS resource will increase the overhead of the PRS. In the specification of 3GPP NR R16, the value of the repetition factor of the DL PRS resource is one of 1, 2, 4, 6, 8, 16 or 32;
- a time gap during for the repeated sending of the DL PRS resource (*dl-PRS-ResourceTimeGap*): this parameter defines the number of slots between two consecutive repeated transmissions of the same PRS resource;
- a muting configuration of the DL PRS: this parameter is used to define that the DL PRS signal is not sent (called muting) on certain allocated time-frequency resources. Muting means that the DL PRS signal is not sent on all allocated time-frequency resources, but is intentionally not sent on some specified time-frequency resources. The purpose of doing so is, on one hand, to avoid collision with other signals such as the SSB, and on the other hand, to avoid interference between signals sent by different TRPs. For instance, by intentionally disabling the DL PRS sending from a specific TRP at certain moments, the UE may successfully receive DL PRS signals from more distant TRPs. The muting operation of the PRS will be explained in detail in the subsequent description, so it will not be elaborated here; and
- number of OFDM symbols occupied by the DL PRS resource (*dl-PRS-NumSymbols*): this parameter defines the number of OFDM symbols allocated to a DL PRS resource within a slot.

As mentioned earlier, all parameters configured in this layer configuration of a DL PRS resource set will be applied to all DL PRS resources contained in this resource set. Therefore, all DL PRS resources in the same DL PRS resource set will be sent at the same periodicity, the same number of repeated transmissions, and occupy the same number of OFDM symbols.

Each DL PRS resource is configured with the following parameters:

- a DL PRS resource identification ID (*nr-DL-PRS-ResourceID*);
- a sequence ID of the DL PRS (*dl-PRS-SequenceID*);
- a starting frequency domain resource unit offset of the DL PRS (*dl-PRS-CombSizeN-AndReOffset*): this parameter defines the frequency domain resource unit offset value used for resource mapping of the DL PRS resource on the first allocated OFDM symbol within a slot. Based on this parameter and the relative offset value specified in TS38.211, the UE may determine the frequency domain resource unit offset value used for resource mapping on each OFDM symbol;
- a resource slot offset of the DL PRS (*dl-PRS-ResourceSlotOffset*): this parameter defines the slot offset relative to the DL PRS resource set. This parameter may determine the slot location where each DL PRS resource is located;
- an OFDM symbol offset of the DL PRS (*dl-PRS-ResourceSymbolOffset*): this parameter defines the time-frequency resource allocation position of a DL PRS resource within a slot. It indicates the index number of the starting OFDM symbol within a slot; and
- QCL information of the DL PRS (*dl-PRS-QCL-Info*): this parameter provides the quasi co-location (QCL for short) information of the DL PRS signal.

5. SL transmission over unlicensed spectrum (SL-U)

When performing the SL transmitting over unlicensed spectrum (SL-U for short), the SL sending needs to meet specific regulatory demands, including the demands of the minimum occupied channel bandwidth (OCB for short) and the maximum power spectral density (PSD for short). For the demand of the OCB, when the UE uses the channel for data transmission, the occupied channel bandwidth is not less than 80% of the channel bandwidth. For the demand of the maximum PSD, the power transmitted by the UE on each 1 MHz shall not exceed 10 dBm. In order to meet the regulatory demands of OCB and PSD, the SL-U needs to adopt the interlaced resource block (IRB) structure. One IRB includes N resource blocks (RBs) discrete in the frequency domain, a total of M IRBs are included in the frequency band range, and the RBs included in the m-th IRB are {m, M + m, 2M + m, 3M + m,...}.

As illustrated in FIG. 9, the system bandwidth includes 20 RBs, including 5 IRBs (i.e. M = 5), and each IRB includes 4 RBs (i.e. N = 4). The frequency domain interval of two neighboring RBs belonging to a same IRB is the same, that is, 5 RBs apart. The digits in the boxes in the figure represent the IRB indexes.

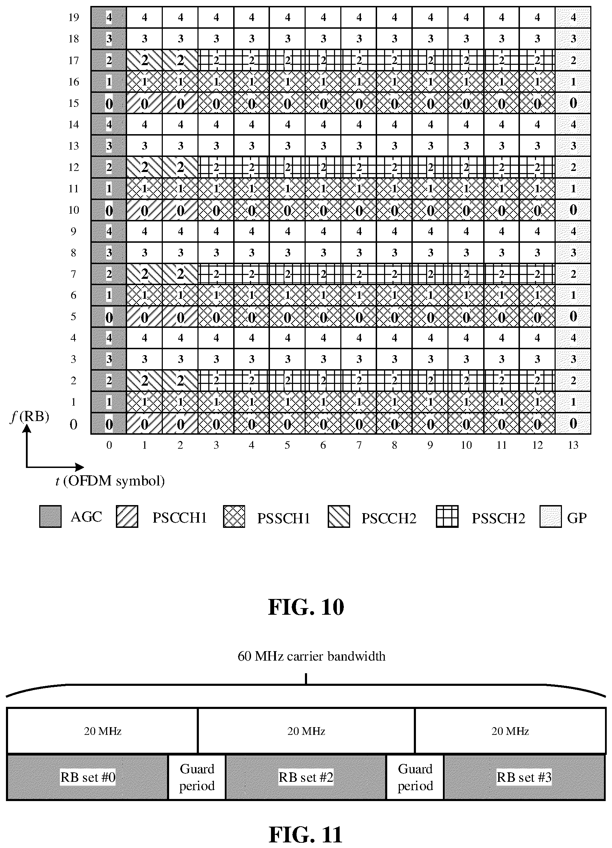

In the SL-U system, if an IRB-based resource allocation granularity is adopted, channels such as PSCCH and PSSCH of the SL-U system should be based on the IRB structure. At this time, the frame structure of the SL-U system is illustrated in FIG. 10, and the digits in the boxes in the figure represent the IRB indexes. FIG. 10 is a schematic diagram of a frame structure including only PSCCH and PSSCH and excluding PSFCH in a slot. The bandwidth illustrated in the figure includes 20 RBs, 5 IRB resources are configured, that is, M = 5, each IRB resource includes 4 RBs, and the digits in the boxes in the figure represent the IRB indexes. In FIG. 10, the system configures that the PSCCH occupies one IRB resource and occupies two OFDM symbols in time domain. PSSCH is at the granularity of IRB. In the slot, the first symbol is the AGC symbol and the last symbol is the GP symbol. In the figure, PSSCH1 occupies IRB#0 and IRB#1, and its corresponding PSCCH1 occupies IRB#0. PSSCH2 occupies IRB#2, and its corresponding PSCCH2 also occupies IRB#2. It should be noted that, the resources occupied by the second-order SCI and the resources occupied by PSCCH DMRS and PSSCH DMRS are not plotted in the figure for simplification.

On the unlicensed spectrum, the UE accesses the channel through listen before talk (LBT). The LBT is at the granularity of 20 MHz in the frequency domain. Every 20 MHz is called an RB set. A carrier may include multiple RB sets, and there is a GP between the RB sets, as illustrated in FIG. 11.

On the unlicensed spectrum, the UE needs to perform LBT first, and access the channel only after the LBT is successfully performed. However, the time for the UE to complete LBT is uncertain. If the UE is restricted to start sending only from the starting point of a slot, the UE may miss the sending opportunity due to it fails to complete the LBT before the starting point. Therefore, in the SL-U, it is considered to add a sending starting point within a slot, i.e., multi-starting point sending. For example, the additional starting point may be at the third or fourth OFDM symbol within the slot.

6. SL-based positioning

In 3GPP R-17, the 3GPP RAN has conducted studies on "NR positioning enhancements" and "Scenarios and requirements of in-coverage, partial coverage and out-of-coverage NR positioning use cases", with the latter focusing on V2X and public safety use cases. In addition, the 3GPP SA1 working group has also formulated requirements for "Ranging-based services" and formulated positioning accuracy requirements for IIoT use cases in out-of-coverage scenarios. 3GPP needs to research and develop SL positioning solutions to support the use cases, scenarios, and demands identified in these activities.

In order to improve positioning accuracy, especially to realize the positioning of UEs located outside the coverage of cellular networks, 3GPP has completed the feasibility and performance study of positioning technology based on SL PRS in the early stage of Rel-18. The standardization of solutions based on SL positioning (including ranging/direction finding) in NR systems will be conducted next.

On the SL, different UEs may send SL PRS on different time-frequency resources, and how to multiplex the PSCCH used to indicate the sending of the SL PRS remains an unresolved issue. In response to this issue, the following embodiments of the disclosure provide a solution, which will be elaborated below. In addition, in the disclosure, all indexes/numbers are counted from 0 unless otherwise stated.

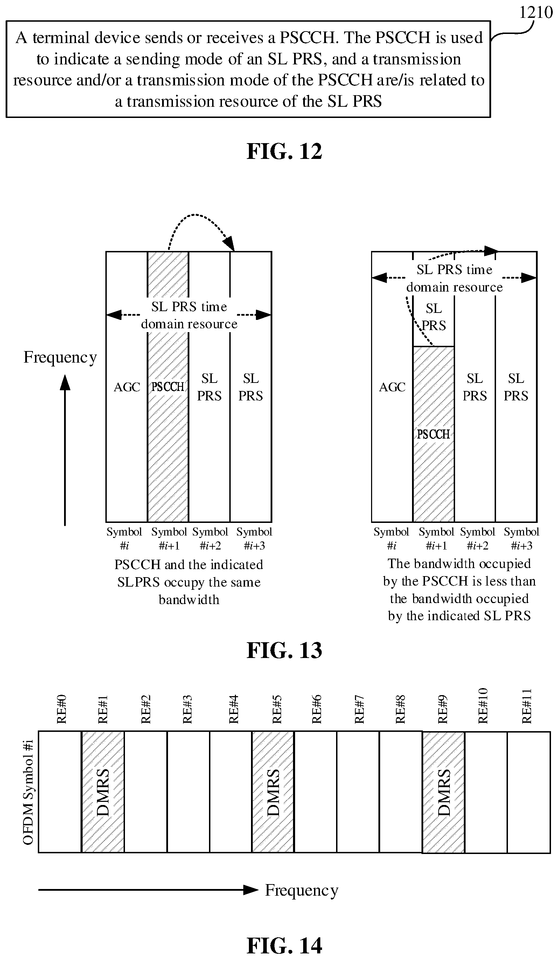

Referring to FIG. 12, it illustrates a flowchart of a method for sidelink communication according to an embodiment of the disclosure. The method may be applied to the network architecture illustrated in FIG. 1, and may be performed by a terminal device. The method may include at least one of the following operations.

In operation 1210, a terminal device sends or receives a PSCCH. The PSCCH is used to indicate a sending mode of an SL PRS, and a transmission resource and/or a transmission mode of the PSCCH are/is related to a transmission resource of the SL PRS.

In some embodiments, the terminal device may send the PSCCH. For example, the terminal device sends the PSCCH to other terminal devices. In some embodiments, the terminal device may receive the PSCCH. For example, the terminal device receives the PSCCH from other terminal devices. In embodiments of the disclosure, the sending mode of the PSCCH is not limited. For example, the PSCCH may be sent in unicast, multicast, or broadcast mode.

In an embodiment of the disclosure, the PSCCH is used to indicate the sending mode of the SL PRS. In some embodiments, the sending mode of the SL PRS includes at least one of:

> one or more slots where the SL PRS is located;
> one or more OFDM symbols occupied by the SL PRS within its respective slot(s);
> PRBs or IRBs occupied by the SL PRS on its one or more OFDM symbols;
> REs occupied by the SL PRS on its one or more OFDM symbols;
> a repetition periodicity of the SL PRS;
> ID information of a receiving terminal of the SL PRS;
> ID information of a sending terminal of the SL PRS; or

sequence information of the SL PRS.

Herein, the ID information of the receiving terminal of the SL PRS may also be understood as ID information of a target receiving terminal of the SL PRS, and used to indicate the receiving terminal/target receiving terminal of the SL PRS. The ID information of the sending terminal of the SL PRS is used to indicate the sending terminal of the SL PRS. Different terminal devices may possess distinct ID information to differentiate between them. Optionally, the sequence information of the SL PRS includes at least sequence ID information of the SL PRS. Optionally, the sequence information of the SL PRS may be indirectly indicated by the ID information of the receiving terminal of the SL PRS.

In embodiments of the disclosure, in the SL-based positioning, multiple terminal devices may send SL PRS using different transmission resources, different terminal devices may separately send PSCCH to indicate sending modes of the SL PRS sent by themselves, and the transmission resource and/or the transmission mode of the PSCCH are/is related to transmission resources of the SL PRS. As a result, the PSCCH sent by the different terminal devices and used to indicate the sending modes of the SL PRS may be multiplexed, thereby reducing mutual interference among the PSCCHs sent by the different terminal devices, ensuring the reception of the SL PRS by the terminal devices at the receiving terminal, and thus improving the positioning accuracy.

In some embodiments, the transmission resource of the PSCCH and/or the transmission mode of the PSCCH include/s an OCC of a DMRS of the PSCCH. The OCC of the DMRS of the PSCCH is related to the transmission resource of the SL PRS. Exemplary, the time-frequency positions of the DMRS of PSCCH sent by different terminal devices are the same, and the OCC of the DMRS varies. That is to say, PSCCH sent by different terminal devices may be distinguished by the OCC of the DMRS of the PSCCH.

In some embodiments, the transmission resource of the PSCCH and/or the transmission mode of the PSCCH include/s a time-frequency position of a DMRS of the PSCCH. The time-frequency position of the DMRS of the PSCCH is related to the transmission resource of the SL PRS. Exemplary, the time-frequency positions of the DMRS of PSCCH sent by different terminal devices are different. That is to say, PSCCH sent by different terminal devices may be distinguished by the time-frequency position of the DMRS of the PSCCH. The time-frequency position of the DMRS is the position of the time-frequency resource occupied by the DMRS, and the time-frequency resource includes time domain resource and frequency domain resource. The time-frequency positions of the two DMRSs are different. This can manifest in several ways: the two DMRSs occupy the same time domain resource but different frequency domain resource; or, the two DMRSs occupy different time domain resource but the same frequency domain resource; or, the two DMRSs occupy different time domain resource as well as different frequency domain resource.

In some embodiments, in order to ensure the accuracy of the channel estimation, the terminal device cannot send a modulation symbol of the PSCCH on a time-frequency position that is available for sending the DMRS of the PSCCH. Alternatively, a sending power of the DMRS of the PSCCH is greater than a sending power of the modulation symbol of the PSCCH. For example, the sending power of the DMRS of the PSCCH is greater than the sending power of the modulation symbol of the PSCCH by a first threshold. The first threshold may be configured by a network, or pre-configured, or specified by a standard, or may depend on the implementation of the terminal device. Exemplary, the first threshold is 2 dB.

In some embodiments, the transmission resource of the PSCCH and/or the transmission mode of the PSCCH include/s a frequency domain position of the PSCCH. The frequency domain position of the PSCCH is related to the transmission resource of the SL PRS. Exemplary, the frequency domain positions of PSCCH sent by different terminal devices are different. That is to say, PSCCH sent by different terminal devices may be distinguished by the frequency domain position of the PSCCH. The frequency domain position of the PSCCH is the position of the frequency domain resource occupied by the PSCCH.

In some embodiments, the transmission resource of the SL PRS includes a time domain position of the SL PRS and/or a frequency domain position of the SL PRS. The time domain position of the SL PRS is the position of the time domain resource occupied by the SL PRS, and the frequency domain position of the SL PRS is the position of the frequency domain resource occupied by the SL PRS. Exemplary, the frequency domain position of the SL PRS is related to the RE offset of the SL PRS.

In some embodiments, the OCC of the DMRS of the PSCCH is related to the frequency domain position of the SL PRS. Optionally, the OCC of the DMRS of PSCCH is related to the RE offset of the SL PRS. Exemplary, the time-frequency positions of the DMRS of PSCCH sent by different terminal devices are the same, the OCC of the DMRS varies, and the OCC of the DMRS is related to the RE offset of the SL PRS. Exemplary, the PSCCH corresponding to the SL PRS sent over different frequency domain resources within the same time domain resource occupies the same time-frequency resources. However, for the SL PRS sent with different RE offsets, the OCC of the DMRS of the PSCCH varies.

In some embodiments, the time-frequency position of the DMRS of the PSCCH is related to the frequency domain position of the SL PRS. Optionally, the time-frequency position of the DMRS of the PSCCH is related to the RE offset of the SL PRS. Exemplary, the time-frequency positions of the DMRS of PSCCH sent by different terminal devices are different, and the time-frequency position of the DMRS is related to the RE offset of the SL PRS. Exemplary, the PSCCH corresponding to the SL PRS sent over different frequency domain resources within the same time domain resource occupies the same time-frequency resources. However, for the SL PRS sent with different RE offsets, the RE positions occupied by the DMRS of the PSCCH are different. Exemplary, in order to ensure the accuracy of the channel estimation, the sending power of the DMRS of the PSCCH on each RE is greater than the sending power of the modulation symbol of the PSCCH. Alternatively, on the RE that may be used to send the DMRS of the PSCCH, the terminal device does not send the modulation symbol of the PSCCH.

In some embodiments, the frequency domain position of the PSCCH is related to the frequency domain position of the SL PRS. Optionally, the frequency domain position of the PSCCH is related to the RE offset of the SL PRS. Exemplary, the frequency domain positions of the PSCCH sent by different terminal devices are different and are uniquely determined by the RE offset of the SL PRS. Exemplary, the PSCCH corresponding to the SL PRS sent over different frequency domain resources within the same time domain resource is frequency division multiplexed, and the frequency domain position of the PSCCH is uniquely determined by the RE offset of the SL PRS sent by the terminal device.

In some embodiments, the frequency domain position of the PSCCH is related to the time domain position and the frequency domain position of the SL PRS. Optionally, the frequency domain position of the PSCCH is related to the time domain position and the RE offset of the SL PRS. Exemplary, the frequency domain positions of the PSCCH sent by different terminal devices are different and are uniquely determined by the time domain position and the RE offset of the SL PRS. Exemplary, the PSCCH corresponding to the SL PRS sent over different time domain resources is frequency division multiplexed, and the frequency domain position of the PSCCH is uniquely determined by the time domain position and the RE offset of the SL PRS sent by the terminal device.

In some embodiments, the PSCCH and the SL PRS are located in neighboring OFDM symbols within a same slot. Exemplary, the OFDM symbol occupied by the PSCCH is preceding and neighboring to the OFDM symbol occupied by the SL PRS indicated by the PSCCH. For example, in a certain slot, the OFDM symbols included in the slot are arranged in ascending order of their numbers. The PSCCH occupies the OFDM symbol #i+1 of the slot, and the SL PRS indicated by the PSCCH occupies the OFDM symbol #i+2 and the OFDM symbol #i+3 of the slot, where the numbers of the OFDM symbol #i+1, the OFDM symbol #i+2, and the OFDM symbol #i+3 are arranged in ascending order.

In some embodiments, a bandwidth occupied by the SL PRS is configured by a network, or pre-configured, or specified by a standard, or indicated by the PSCCH. For example, the bandwidth occupied by the SL PRS is configured by the network, or pre-configured, or specified by the standard as the bandwidth of the SL PRS resource pool. For example, the bandwidth occupied by the SL PRS is less than or equal to the bandwidth of the SL PRS resource pool. The bandwidth occupied by the SL PRS is indicated by the PSCCH. The bandwidth occupied by the SL PRS includes one or more sub-channels. Each sub-channel includes PRB(s) or IRB(s), and the number of the included PRB(s) or IRB(s) is as configured by a network, or pre-configured, or specified by a standard.

In some embodiments, a bandwidth of the PSCCH is less than or equal to a bandwidth of the SL PRS. Exemplary, the bandwidth of the SL PRS includes at least one subchannel, each sub-channel includes at least one PRB or IRB, and the bandwidth of the PSCCH is less than or equal to one sub-channel. Exemplary, the bandwidth of the PSCCH is equal to floor (B/Y). B is a number of PRBs or IRBs occupied by the SL PRS, or B is a number of PRBs or IRBs contained in a SL PRS resource pool. Y is a number of allowed RE offsets within a time domain resource of the SL PRS. The floor () represents rounding down to a nearest integer.

In some embodiments, a sending power of the terminal device remains constant within one SL PRS time domain resource, and the one SL PRS time domain resource includes a time domain resource occupied by the PSCCH and a time domain resource occupied by the SL PRS indicated by the PSCCH. Optionally, the one SL PRS time domain resource also include a time domain resource occupied by the AGC. The time domain resource occupied by the AGC is preceding to the time domain resource occupied by the PSCCH. Exemplary, the AGC, the PSCCH, and the SL PRS are located within neighboring OFDM symbols of the same slot. The OFDM symbol occupied by the AGC is preceding and neighboring to the OFDM symbol occupied by the PSCCH, and the OFDM symbol occupied by the PSCCH is preceding and neighboring to the OFDM symbol occupied by the SL PRS indicated by the PSCCH. For example, in a certain slot, the OFDM symbols included in the slot are arranged in ascending order of their numbers. The AGC occupies the OFDM symbol #i of the slot, the PSCCH occupies the OFDM symbol #i+1 of the slot, and the SL PRS indicated by the PSCCH occupies the OFDM symbol #i+2 and the OFDM symbol #i+3 of the slot. The numbers of the OFDM symbol #i, the OFDM symbol #i+1, the OFDM symbol #i+2, and the OFDM symbol #i+3 are arranged in ascending order. In addition, the sending power of the terminal device remains constant within one SL PRS time domain resource, which helps ensure the reception performance of the receiving terminal.

In some embodiments, the transmission resource of the SL PRS is determined from a dedicated resource pool for the SL PRS. The dedicated resource pool for the SL PRS is a resource pool dedicated to the transmission of the SL PRS, and other information other than the SL PRS in the SL communication cannot be transmitted by using resources in the dedicated resource pool for the SL PRS.

In some embodiments, the transmission resource of the SL PRS is determined from a shared resource pool for the SL PRS and SL communication. The shared resource pool is a resource pool shared between the SL PRS and other information other than the SL PRS in the SL communication, and the SL PRS and other information other than the SL PRS in the SL communication may be transmitted by using resources in the shared resource pool.

In embodiments of the disclosure, in the SL-based positioning, multiple terminal devices may send SL PRS using different transmission resources, different terminal devices may separately send PSCCH to indicate sending modes of the SL PRS sent by themselves, and the transmission resource and/or the transmission mode of the PSCCH are/is related to transmission resources of the SL PRS. As a result, the PSCCH sent by the different terminal devices and used to indicate the sending modes of the SL PRS may be multiplexed, thereby reducing mutual interference among the PSCCHs sent by the different terminal devices, ensuring the reception of the SL PRS by the terminal devices at the receiving terminal, and thus improving the positioning accuracy.

Hereinafter, the solutions of the disclosure will be illustratively described by way of several embodiments. However, it should be noted that, provided there is no contradiction, the contents from different embodiments of the disclosure may be combined arbitrarily to form new embodiments, all of which fall within the scope of protection of the disclosure.

In an exemplary embodiment of the disclosure, within the dedicated resource pool for the SL PRS, the bandwidth occupied by the SL PRS is configured by a network, or pre-configured, or specified by a standard. The PSCCH used to indicate the sending of the SL PRS and the indicated SL PRS are sent on neighboring OFDM symbols within the same slot, and the DMRS of the PSCCH is related to the RE offset of the indicated SL PRS.

In the embodiment, the bandwidth occupied by the SL PRS is configured by the network, or pre-configured, or specified by the standard. For example, the bandwidth of the SL PRS is configured by the network, or pre-configured, or specified by the standard as the bandwidth of the SL PRS resource pool. The PSCCH indicating the sending of the SL PRS and the indicated SL PRS are sent on neighboring OFDM symbols within the same slot. The bandwidth of the PSCCH may be equal to or smaller than the bandwidth of the indicated SL PRS. The multiple OFDM symbols occupied by the above PSCCH and the SL PRS indicated by the PSCCH are referred to as one SL PRS time domain resource. As illustrated in FIG. 13, within one SL PRS time domain resource, the sending power of one UE remains constant. In the embodiment, different UEs may occupy different REs within the same OFDM symbol to send the SL PRS, that is, they may adopt different RE offsets. The allowed RE offset within the SL PRS time domain resource may be configured by the network, or pre-configured, or specified by a standard. For example, assuming that the comb of the SL PRS is 2, UE #0 adopts an RE offset of 0 and sends the SL PRS on RE #0, #2, #4,..., whereas UE #1 adopts an RE offset of 1 and sends the SL PRS on RE #1, #3, #5,....

In the embodiment, within one SL PRS time domain resource, the PSCCH sent by different UEs to indicate the sending mode of the SL PRS occupies the same time-frequency resource, and the DMRS of the PSCCH is related to the RE offset of the indicated SL PRS. For example:

Mode 1-1: the time-frequency position of the DMRS of the PSCCH sent by different UEs are the same, that is, the RE positions occupied by the DMRS are the same for each RB occupied by the PSCCH, but for the DMRS RE in the same RB, the adopted OCC is determined by the RE offset of the indicated SL PRS. Exemplary:

- For each RB occupied by the PSCCH, the DMRS of the PSCCH may occupy 3 REs in the RB, which are the 1st RE, the 5th RE, and the 9th RE, respectively, as illustrated in FIG. 14. In the SL PRS time domain resource, 3 different RE offsets corresponding to RE offsets #0, #1, and #2 are allowed. The DMRS of the PSCCH used to indicate the SL PRS with RE offset #0 adopts a code of $\{1, 1, 1\}$, that is, the OCC index #0 in Table 1. The DMRS of the PSCCH used to indicate the SL PRS with RE offset #1 adopts a code of $\{1, e^{j2/3\pi}, e^{-j2/3\pi}\}$, that is, the OCC index #1 in Table 1. The DMRS of the PSCCH used to indicate the SL PRS with RE offset #2 adopts a code of $\{1, e^{-j2/3\pi}, e^{j2/3\pi}\}$, that is, the OCC index #2 in Table 1.

- For each RB occupied by the PSCCH, the DMRS of the PSCCH may occupy 4 REs in the RB. In the SL PRS time domain resource, 4 different RE offsets are allowed. The DMRS of the PSCCH used to indicate the SL PRS with the first RE offset adopts a code of $\{1, 1, 1, 1\}$. The DMRS of the PSCCH used to indicate the SL PRS with the second RE offset adopts a code of $\{1, e^{j1/2\pi}, e^{j\pi}, e^{-j1/2\pi}\}$. The DMRS of the PSCCH used to indicate the SL PRS with the third RE offset adopts a code of $\{1, e^{j\pi}, 1, e^{j\pi}\}$. The DMRS of the PSCCH used to indicate the SL PRS with the fourth RE offset adopts a code of $\{1, e^{-j1/2\pi}, e^{j\pi}, e^{j1/2\pi}\}$.

- For each RB occupied by the PSCCH, the DMRS of the PSCCH may occupy X REs in the RB, and the number of codes available for the PSCCH DMRS is also X, respectively corresponding to indexes #0, #1,..., #X-1, and X is a positive integer. However, Y RE offsets are allowed in the SL PRS time domain resource, respectively corresponding to indexes #0, #1,..., #Y-1, and Y is a positive integer. The DMRS of the PSCCH used to indicate the SL PRS with RE offset #i adopts a code of Y mod X, where "mod" denotes the modulo operation, and i is an integer less than or equal to Y.

Mode 1-2: the time-frequency position of the RE occupied by the DMRS of the PSCCH is determined by the RE offset of the SL PRS indicated by the PSCCH. In this mode, in order to ensure the accuracy of the channel estimation, the UE cannot send the modulation symbol of the PSCCH on the RE that may be used to send PSCCH DMRS. The following is an example of the determination of the PSCCH DMRS based on the RE offset of the SL PRS in this mode.

• For each RB occupied by the PSCCH, the DMRS of the PSCCH may occupy 3 REs in the RB, and Y different RE offsets are allowed in the SL PRS time domain resource, respectively corresponding to RE offsets #0, #1,... #Y-1, and Y is a positive integer. Then,

- The DMRS of the PSCCH used to indicate the SL PRS with RE offset #i occupies the (1+i mod 12)-th RE, the (4+1+i mod 12)-th RE, the (8+1+i mod 12)-th RE in the RB, and i is an integer less than or equal to Y; alternatively,

- The DMRS of the PSCCH used to indicate the SL PRS with RE offset #i occupies the i mod 12)-th RE, the (4+i mod 12)-th RE, the (8+i mod 12)-th RE in the RB, and i is an integer less than or equal to Y.

• For each RB occupied by the PSCCH, the DMRS of the PSCCH may occupy 4 REs in the RB, and Y different RE offsets are allowed in the SL PRS time domain resource, respectively corresponding to RE offsets #0, #1,... #Y-1, and Y is a positive integer. Then,

- The DMRS of the PSCCH used to indicate the SL PRS with RE offset #i occupies the ($i$ mod 12)-th RE, the (3+$i$ mod 12)-th RE, the (6+$i$ mod 12)-th RE, the (9+$i$ mod 12)-th RE in the RB, and $i$ is an integer less than or equal to Y.

• For each RB occupied by the PSCCH, the DMRS of the PSCCH may occupy X REs in the RB, and Y different RE offsets are allowed in the SL PRS time domain resource, respectively corresponding to RE offsets #0, #1,... #Y-1, and Y is a positive integer. Then,

- The DMRS of the PSCCH used to indicate the SL PRS with RE offset #i occupies the (s_0+$i$ mod 12)-th RE, the (s_1+$i$ mod 12)-th RE, ..., the ($s_{X-1}$+$i$ mod 12)-th RE in the RB. Where s_0, s_1, ..., $s_{X-1}$ are initial DMRS RE indexes, as configured by the network, or pre-configured, or specified by the standard, and $i$ is an integer less than or equal to Y.

Mode 1-3: the time-frequency position of the RE occupied by the DMRS of the PSCCH is determined by the RE offset of the SL PRS indicated by the PSCCH. In this mode, in order to ensure the accuracy of the channel estimation, the sending power of the PSCCH DMRS on each RE may be higher than the sending power of the modulation symbol of the PSCCH. For example, the power of the PSCCH DMRS on each RE may increase by 2 dB with respect to the sending power of the modulation symbol of the PSCCH on each RE.

In an exemplary embodiment of the disclosure, within the dedicated resource pool for the SL PRS, the bandwidth occupied by the SL PRS is indicated by the PSCCH. The PSCCH used to indicate the sending of the SL PRS and the indicated SL PRS are sent on neighboring OFDM symbols within the same slot, and the DMRS of the PSCCH is related to the RE offset of the indicated SL PRS.

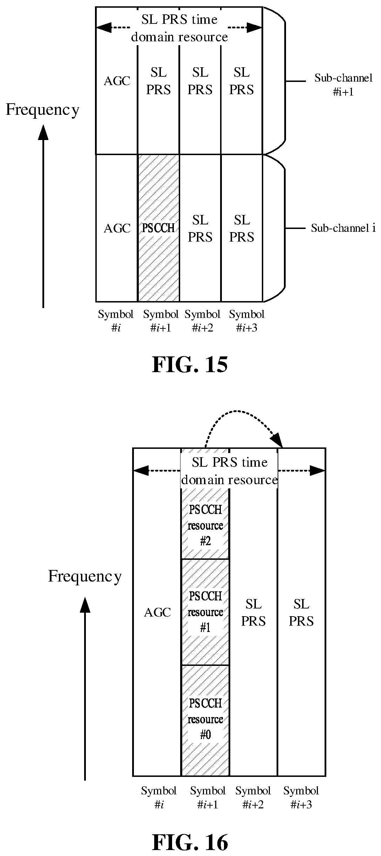

In the embodiment, the bandwidth occupied by the SL PRS is less than or equal to the bandwidth of the resource pool where the SL PRS is located. The bandwidth occupied by the SL PRS is indicated by the PSCCH. The bandwidth occupied by the SL PRS includes one or more sub-channels. Each sub-channel includes PRB(s) or IRB(s), and the number of the included PRB(s) or IRB(s) is configured by a network, or pre-configured, or specified by a standard. The PSCCH for the sending of the SL PRS and the indicated SL PRS are sent on neighboring OFDM symbols within the same slot. The bandwidth of the PSCCH is equal to or less than one subchannel. For example, the frequency domain resource occupied by the PSCCH is the first subchannel occupied by the SL PRS. The multiple OFDM symbols occupied by the above PSCCH and the SL PRS indicated by the PSCCH are referred to as one SL PRS time domain resource. As illustrated in FIG. 15, within one SL PRS time domain resource, the sending power of one UE remains constant. In the embodiment, UEs may occupy different REs within the same OFDM symbol to send the SL PRS, that is, they may adopt different RE offsets. The allowed RE offset within the SL PRS time domain resource may be configured by the network, or pre-configured, or specified by a standard. For example, assuming that the comb of the SL PRS is 2, UE #0 adopts an RE offset of 0 and sends the SL PRS on RE #0, #2, #4,..., whereas UE #1 adopts an RE offset of 1 and sends the SL PRS on RE #1, #3, #5,....

In the embodiment, within one SL PRS time domain resource, the PSCCH indicating the SL PRS occupies the same time-frequency resource, and the DMRS of the PSCCH is related to the RE offset of the indicated SL PRS. Specific examples may be found in Modes 1-1 to 1-3 described above.

In an exemplary embodiment of the disclosure, within the dedicated resource pool for the SL PRS, the bandwidth occupied by the SL PRS is configured by a network, or pre-configured, or specified by a standard. The PSCCH used to indicate the sending of the SL PRS and the indicated SL PRS are sent on neighboring OFDM symbols within the same slot, and the frequency domain position of the PSCCH is related to the RE offset of the indicated SL PRS.

In the embodiment, the bandwidth occupied by the SL PRS is configured by the network, or pre-configured, or specified by the standard. For example, the bandwidth of the SL PRS is configured by the network, or pre-configured, or specified by the standard as the bandwidth of the SL PRS resource pool. The PSCCH indicating the sending of the SL PRS and the indicated SL PRS are sent on neighboring OFDM symbols within the same slot. The multiple OFDM symbols for the sending of the SL PRS and the PSCCH are referred to as one SL PRS time domain resource. The bandwidth of the PSCCH may be equal to or smaller than the bandwidth of the indicated SL PRS. For example, the bandwidth of the PSCCH is equal to floor (B/Y). B is the number of RBs occupied by the SL PRS, as configured by the network, or pre-configured, or specified by the standard. Y is the number of RE offsets allowed in the time domain resource of the SL PRS, respectively corresponding to indexes #0, #1,..., #Y-1. The floor () represents rounding down to a nearest integer. In the OFDM symbols for the sending of the PSCCH, every group of B/Y RBs is referred to as one PSCCH resource from the starting point of the bandwidth occupied by the SL PRS. There are Y PSCCHs in the SL PRS time domain resource, respectively corresponding to the indexes #0, #1,..., #Y-1, and the PSCCH sent on the PSCCH resource with the index #i is used to indicate the SL PRS sent by using the RE index #i.

An example is illustrated in FIG. 16, where there are 3 PSCCH resources in the SL PRS time domain resource, as configured by the network, or pre-configured, or specified by the standard. 3 RE offsets are allowed in the SL PRS resource. The RE offset indexes adopted by the SL PRS are #0, #1, and #2, respectively, and the SL PRS is indicated by the PSCCH sent on the PSCCH resources #0, #1, or #2.

In an exemplary embodiment of the disclosure, within the dedicated resource pool for the SL PRS, the PSCCH used to indicate the sending of the SL PRS and the indicated SL PRS are located within the same slot. The frequency domain position of the PSCCH is related to the time domain position and the RE offset of the indicated SL PRS.

In the embodiment, there are one or more specific OFDM symbols within the slot for sending the PSCCH. On the one or more specific OFDM symbols, there are multiple PSCCH resources, with each PSCCH resource occupying specific RBs or IRBs. In addition, there are one or more SL PRS time domain resources within the slot, and these SL PRS time domain resources are exclusively used to send the SL PRS, as configured by the network, or pre-configured, or specified by the standard. The SL PRS sent within each SL PRS time domain resource may adopt one or more different RE offsets.

The PSCCH indicating the sending of the SL PRS and the indicated SL PRS are sent in the same slot. The bandwidth of the PSCCH may be equal to or smaller than the bandwidth of the indicated SL PRS. For example, the bandwidth of the PSCCH is equal to floor (B/Y). B is the number of RBs or IRBs occupied by the SL PRS, or B is the number of RBs or IRBs contained in the resource pool where the SL PRS is located, as configured by the network, or pre-configured, or specified by the standard. Y is the number of RE offsets allowed in the time domain resource of the SL PRS, respectively corresponding to indexes #0, #1,..., #Y-1. The floor () represents rounding down to a nearest integer. In the OFDM symbols for the sending of the PSCCH, every group of B/Y RBs or IRBs is referred to as one PSCCH resource from the starting point of the bandwidth occupied by the SL PRS. There are Y PSCCHs in the SL PRS time domain resource, respectively corresponding to the indexes #0, 1,..., #Y-1, and the PSCCH sent on the PSCCH resource with the index #i is used to indicate the SL PRS sent by using the RE index #i.

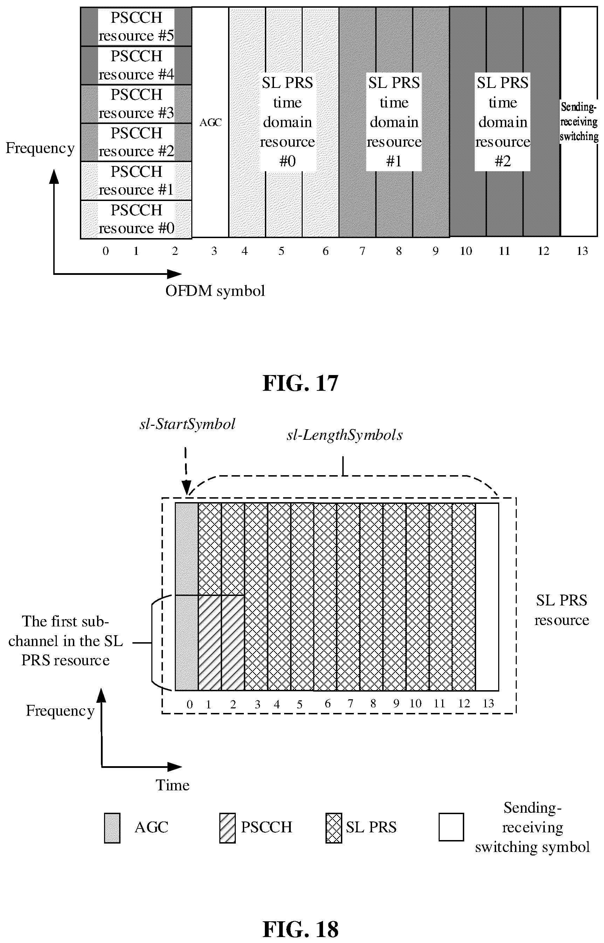

An example is illustrated in FIG. 17, where 6 PSCCH resources are configured in the slot, and each PSCCH resource occupies different RBs or IRBs, respectively corresponding to indexes #0, #1,..., #5. 3 SL PRS time domain resources are configured in the same slot, and 2 different RE offsets are allowed in each SL PRS time domain resource, so that there are a total of 6 SL PRS resources in the slot. The 6 SL PRS resources in the slot may be sorted in one of the following two modes as configured by the network, or pre-configured, or specified by the standard.

Mode 1: the 6 SL PRS resources are sorted in the order of RE offset first and then time domain resource index. Specifically, the SL PRS resource that uses the first RE offset in the SL PRS time domain resource #0 is assigned index #0, the SL PRS resource that uses the second RE offset in the SL PRS time domain resource #0 is assigned index #1, the SL PRS resource that uses the first RE offset in the SL PRS time domain resource #1 is assigned index #2, and so on.

Mode 2: the 6 SL PRS resources are sorted in the order of time domain resource index first and then RE offset. Specifically, the SL PRS resource that uses the first RE offset in the SL PRS time domain resource #0 is assigned index #0, the SL PRS resource that uses the first RE offset in the SL PRS time domain resource #1 is assigned index #1, the SL PRS resource that uses the first RE offset in the SL PRS time domain resource #2 is assigned index #2, the SL PRS resource that uses the second RE offset in the SL PRS time domain resource #0 is assigned index #3, and so on.

The PSCCH sent on the PSCCH resource #i indicates the sending of the SL PRS on the SL PRS resource #i.

In an exemplary embodiment of the disclosure, within the shared resource pool for the SL PRS and the SL communication, the bandwidth occupied by the SL PRS is configured by a network, or pre-configured, or specified by a standard. The PSCCH used to indicate the sending of the SL PRS and the indicated SL PRS are located in neighboring OFDM symbols within the same slot, and the DMRS of the PSCCH is related to the RE offset of the indicated SL PRS.

In the embodiment, the bandwidth occupied by the SL PRS and the OFDM symbols occupied by the SL PRS in one slot are configured by the network, or pre-configured, or specified by the standard. For example, the bandwidth occupied by the SL PRS is configured by the network, or pre-configured, or specified by the standard as the bandwidth of the resource pool where the SL PRS is located. The OFDM symbols occupied by the SL PRS in one slot are configured by the network, or pre-configured, or specified by the standard as the OFDM symbols available for the SL sending on the SL BWP where the SL PRS is located. The bandwidth and the OFDM symbols form an SL PRS resource, and in the SL PRS resource, the PSCCH used to indicate the sending of the SL PRS occupies partial OFDM symbols in the first sub-channel in the SL PRS resource. Each sub-channel includes PRB(s) or IRB(s), and the number of the included PRB(s) or IRB(s) is configured by a network, or pre-configured, or specified by a standard. The partial OFDM symbols are configured by a network, or pre-configured, or specified by a standard. As illustrated in FIG. 18.

In the embodiment, within one SL PRS time domain resource, the PSCCH indicating the SL PRS occupies the same time-frequency resource, and the DMRS of the PSCCH is related to the RE offset of the indicated SL PRS. For example:

The RE positions occupied by the DMRS are the same for each RB occupied by the PSCCH, but for the DMRS RE in the same RB, the adopted OCC is determined by the RE offset of the indicated SL PRS. Exemplary:

- For each RB occupied by the PSCCH, the DMRS of the PSCCH may occupy 3 REs in the RB, which are the 1st RE, the 5th RE, and the 9th RE, respectively, as illustrated in FIG. 14. In the SL PRS time domain resource, 3 different RE offsets corresponding to RE offsets #0, #1, ... are allowed. The DMRS of the PSCCH used to indicate the SL PRS with RE offset #0 adopts a code of $\{1, 1, 1\}$, that is, the OCC index #0 in Table 1. The DMRS of the PSCCH used to indicate the SL PRS with RE offset #1 adopts a code of $\{1, e^{j2/3\pi}, e^{-j2/3\pi}\}$, that is, the OCC index #1 in Table 1. The DMRS of the PSCCH used to indicate the SL PRS with RE offset #2 adopts a code of $\{1, e^{-j2/3\pi}, e^{j2/3\pi}\}$, that is, the OCC index #2 in Table 1.

- For each RB occupied by the PSCCH, the DMRS of the PSCCH may occupy X REs in the RB, and the number of codes available for the PSCCH DMRS is also X, respectively corresponding to indexes #0, #1,..., #X-1, and X is a positive integer. However, Y RE offsets are allowed in the SL PRS time domain resource, respectively corresponding to indexes #0, #1,..., #Y-1, and Y is a positive integer. The DMRS of the PSCCH used to indicate the SL PRS with RE offset #i adopts a code of Y mod X, where "mod" denotes the modulo operation, and i is an integer less than or equal to Y.

Optionally, the number of RE offsets of SL PRS allowed in one SL PRS resource should be less than or equal to 3.

In an exemplary embodiment of the disclosure, within the shared resource pool for the SL PRS and the SL communication, the bandwidth occupied by the SL PRS is indicated by the PSCCH. The PSCCH used to indicate the sending of the SL PRS and the indicated SL PRS are located in neighboring OFDM symbols within the same slot, and the DMRS of the PSCCH is related to the RE offset of the indicated SL PRS.

In the embodiment, the minimum bandwidth occupied by the SL PRS and the OFDM symbols occupied by the SL PRS in one slot are configured by the network, or pre-configured, or specified by the standard. For example, the minimum bandwidth occupied by the SL PRS is configured by the network, or pre-configured, or specified by the standard as one or more sub-channels. The OFDM symbols occupied by the SL PRS in one slot are configured by the network, or pre-configured, or specified by the standard as the OFDM symbols available for the SL sending on the SL BWP where the SL PRS is located. The minimum bandwidth and the OFDM symbols form an SL PRS resource, and in the SL PRS resource, the PSCCH indicating the sending of the SL PRS occupies partial OFDM symbols in the first sub-channel in the SL PRS resource. Each sub-channel includes PRB(s) or IRB(s), and the number of the included PRB(s) or IRB(s) is configured by a network, or pre-configured, or specified by a standard. The partial OFDM symbols are configured by a network, or pre-configured, or specified by a standard.

According to the first implementation of the embodiment, within one SL PRS time domain resource, the PSCCH indicating the SL PRS occupies the same time-frequency resource, and the DMRS of the PSCCH is related to the RE offset of the indicated SL PRS. For example:

The RE positions occupied by the DMRS are the same for each RB occupied by the PSCCH, but for the DMRS RE in the same RB, the adopted OCC is determined by the RE offset of the indicated SL PRS.

According to the second implementation of the embodiment, within one SL PRS time domain resource, the PSCCH indicating the SL PRS occupies different frequency domain resources. For example:

Different sub-channels within the SL PRS resources are occupied by PSCCHs indicating SL PRS with different RE offsets. Exemplary:

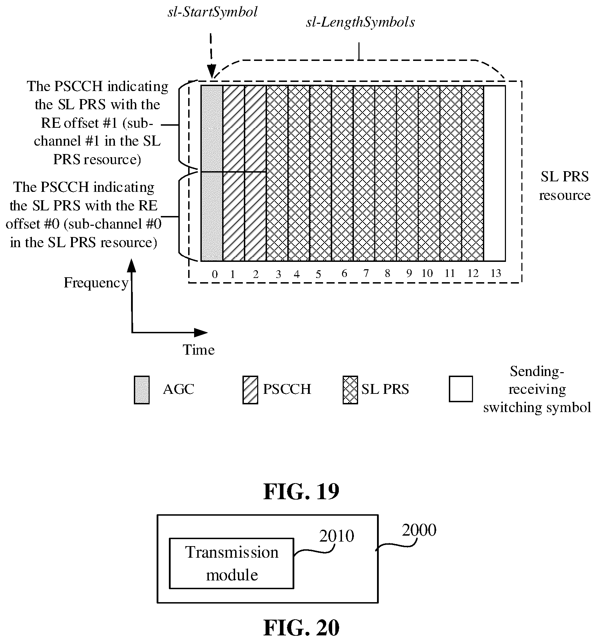

One SL PRS resource includes X sub-channels, respectively corresponding to indexes #0, #1,..., #X-1. However, Y RE offsets are allowed in the SL PRS time domain resource, respectively corresponding to indexes #0, #1,..., #Y-1. The PSCCH used to indicate the PRS with RE offset #i adopts the sub-channel Y mod X, where "mod" denotes the modulo operation. An example is illustrated in FIG. 19, where one SL PRS resource includes two sub-channels, in which two RE offsets are allowed. The PSCCH used to indicate the SL PRS with the RE offset #0 is sent on the sub-channel #0, and the PSCCH used to indicate the SL PRS with the RE offset #1 is sent on the sub-channel #1.

The sending power of the UE on different OFDM symbols within one SL PRS resource should remain constant.

The following are apparatus embodiments of the disclosure that can be used to perform the method embodiments of the disclosure. For details not disclosed in the apparatus embodiments of the disclosure, reference is made to the method embodiments of the disclosure.

Referring to FIG. 20, it illustrates a block diagram of the apparatus for sidelink communication according to an embodiment of the disclosure. The apparatus has a function of implementing the method for sidelink communication described above, and the function may be implemented by hardware, or by hardware executing corresponding software. The apparatus may be the terminal device introduced above, or be set in the terminal device. As illustrated in FIG. 20, the apparatus 2000 may include a transmission module 2010.

The transmission module 2010 is configured to send or receive a PSCCH. The PSCCH is used to indicate a sending mode of a SL PRS, and a transmission resource and/or a transmission mode of the PSCCH are/is related to a transmission resource of the SL PRS.

In some embodiments, the transmission resource of the PSCCH and/or the transmission mode of the PSCCH include/s an OCC of a DMRS of the PSCCH.

In some embodiments, the OCC of the DMRS of the PSCCH is related to the transmission resource of the SL PRS.

In some embodiments, the transmission resource of the PSCCH and/or the transmission mode of the PSCCH include/s a time-frequency position of a DMRS of the PSCCH.

In some embodiments, the time-frequency position of the DMRS of the PSCCH is related to the transmission resource of the SL PRS.

In some embodiments, a modulation symbol of the PSCCH cannot be sent on a time-frequency position that is available for sending the DMRS of the PSCCH; and/or a sending power of the DMRS of the PSCCH is greater than a sending power of the modulation symbol of the PSCCH.

In some embodiments, the transmission resource of the PSCCH and/or the transmission mode of the PSCCH include/s a frequency domain position of the PSCCH.

In some embodiments, the frequency domain position of the PSCCH is related to the transmission resource of the SL PRS.

In some embodiments, the transmission resource of the SL PRS comprises a time domain position of the SL PRS and/or a frequency domain position of the SL PRS.

In some embodiments, the frequency domain position of the SL PRS is related to a RE offset of the SL PRS.

In some embodiments, the PSCCH and the SL PRS are located in neighboring OFDM symbols within a same slot.

In some embodiments, a bandwidth occupied by the SL PRS is configured by a network, or pre-configured, or specified by a standard, or indicated by the PSCCH.

In some embodiments, a bandwidth of the PSCCH is less than or equal to a bandwidth of the SL PRS.

In some embodiments, the bandwidth of the SL PRS includes at least one subchannel, each sub-channel includes at least one PRB or IRB, and the bandwidth of the PSCCH is less than or equal to one sub-channel.

In some embodiments, the bandwidth of the PSCCH is equal to floor (B/Y). B is a number of PRBs or IRBs occupied by the SL PRS, or B is a number of PRBs or IRBs contained in a SL PRS resource pool. Y is a number of allowed RE offsets within a time domain resource of the SL PRS. The floor () represents rounding down to a nearest integer.

In some embodiments, a sending power remains constant within one SL PRS time domain resource, and the one SL PRS time domain resource includes a time domain resource occupied by the PSCCH and a time domain resource occupied by the SL PRS.

In some embodiments, the one SL PRS time domain resource further includes a time domain resource occupied by an AGC.

In some embodiments, the transmission resource of the SL PRS is determined from a dedicated resource pool for the SL PRS.

In some embodiments, the transmission resource of the SL PRS is determined from a shared resource pool for the SL PRS and SL communication.

In some embodiments, the sending mode of the SL PRS includes at least one of:

one or more slots where the SL PRS is located;
one or more OFDM symbols occupied by the SL PRS within its respective slot(s);
PRBs or IRBs occupied by the SL PRS on its one or more OFDM symbols;
REs occupied by the SL PRS on its one or more OFDM symbols;
a repetition periodicity of the SL PRS;
ID information of a receiving terminal of the SL PRS;
ID information of a sending terminal of the SL PRS; or
sequence information of the SL PRS.

It should be noted that, when the apparatus provided in the above embodiments is only exemplified by the partition of the above-mentioned functional modules during the implementation of its functions. In practical application, the above-mentioned functions can be assigned to be completed by different function modules as actual needed, that is, the content structure of the apparatus can be partition into different function modules to complete all or part of the functions described above.

With regard to the apparatus in the above embodiments, the specific manner in which the various modules perform operations has been described in detail in the embodiments related to the method, and will not be described in detail here. For details not described in detail in the apparatus embodiments, reference can be made to the method embodiments described above.

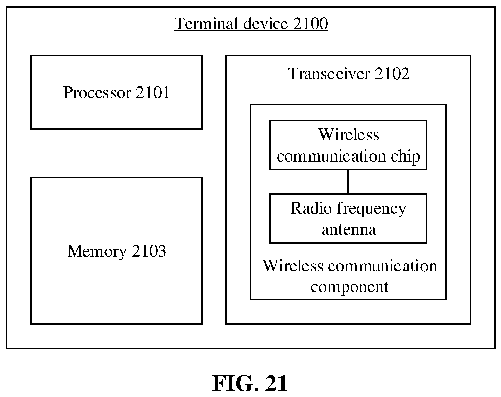

Referring to FIG. 21, it illustrates a schematic structural diagram of the terminal device according to an embodiment of the disclosure. The terminal device 2100 may include a processor 2101, a transceiver 2102, and a memory 2103.

The processor 2101 includes one or more processing cores. The processor 2101 executes various functional applications and information processing by running software programs and modules.

The transceiver 2102 may include a receiver and a transmitter. For example, the receiver and the transmitter may be implemented as a same wireless communication component, and the wireless communication component may include a wireless communication chip and a radio frequency antenna.

The memory 2103 may be connected to the processor 2101 and the transceiver 2102.

The memory 2103 may be used to store a computer program executed by a processor, and the processor 2101 may be configured to execute the computer program to implement various operations in the method embodiments described above.

In an exemplary embodiment, the processor 2101 is configured to control the transceiver 2102 to send or receive a PSCCH. The PSCCH is used to indicate a sending mode of a SL PRS, and a transmission resource and/or a transmission mode of the PSCCH are/is related to a transmission resource of the SL PRS.

For details not described in detail in the embodiment, reference can be made to the embodiments described above, and will not be repeated here.

Furthermore, the memory may be implemented by any type of volatile or non-volatile storage device, or a combination thereof. The volatile or non-volatile storage devices include, but are not limited to: a magnetic disk or an optical disk, an electrically erasable programmable read-only memory (EEPROM), an erasable programmable read-only memory (EPROM), a static random-access memory (SRAM), a read-only memory (ROM), a magnetic storage, a flash memory, and a programmable read-only memory (PROM).

In the embodiment of the disclosure, a computer-readable storage medium is further provided. The computer-readable storage medium stores a computer program that, when executed by a processor, causes the processor to implement the method for sidelink communication described above. Optionally, the computer-readable storage medium may include a read-only memory (ROM), a random-access memory (RAM), a solid state drive (SSD), an optical disk, or the like. The RAM may include a resistance random access memory (ReRAM) and a dynamic random access memory (DRAM).

In the embodiment of the disclosure, a chip including programmable logic circuits and/or program instructions is further provided. When the chip is in operation, the chip implements the method for sidelink communication described above.

In the embodiment of the disclosure, a computer program product including computer instructions is further provided. The computer instructions are stored in a computer-readable storage medium. A processor reads and executes the computer instructions from the computer-readable storage medium to implement the method for sidelink communication described above.

It should be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B.

In the description of the embodiments of the disclosure, the term "correspond/correspondence" may represent that there is a direct or indirect correspondence between the two objects; or, may represent that there is an association relationship between two objects; or, may be a relationship such as indicating and being indicated, configuring and being configured, etc.

In the embodiments of the disclosure, "predefined" may be implemented by storing corresponding codes, tables, or other means which may be used to indicate relevant information in advance within a device (including, for example, a terminal device and a network device), the specific implementation thereof is not be limited in the disclosure. For example, "predefined" may refer to "defined in a protocol".

In some embodiments of the disclosure, the "protocol" may refer to a standard protocol in the field of communications, and for example, it may include an LTE protocol, an NR protocol, and relevant protocols applied to future communication systems, which are not limited in the disclosure.

The term "multiple/a plurality of" mentioned herein is "two or more". The term "and/or" is an association relationship that describes associated objects, and indicates that there may be three relationships. For example, A and/or B, which may indicate three situations: A exists alone, A and B exist simultaneously, and B exists alone. The character "/" generally indicates that the anterior and posterior associated objects are in a kind of "or" relationship.

The term "greater than or equal to" mentioned herein may indicate "greater than or equal to" or simply "greater than"; and "less than or equal to" may indicate "less than or equal to" or simply "less than"

Additionally, the number of the operations described herein merely illustrates one possible sequence of execution among the operations. In some other embodiments, the above operations may also be executed out of numbering sequence. For example, two operations with different numbers may be executed simultaneously, or two operations with different numbers may be executed in an order opposite to that illustrated in the diagram.

Those skilled in the art should be aware that in one or more examples described above, the functions described in the embodiments of the disclosure may be implemented in hardware, software, firmware, or any combination thereof. When implemented in software, these functions may be stored in a computer readable medium or transmitted as one or more instructions or codes on a computer readable medium. The computer-readable medium includes a computer storage medium and a communication medium, and the communication medium includes any medium that facilitates the transmission of a computer program from one place to another. The storage medium may be any available medium accessible by a general-purpose or special-purpose computer.

The embodiments described above are merely exemplary and are not intended to limit the scope of the disclosure. Any modifications, equivalent substitutions, improvements, or the like made within the spirit and principles of the disclosure shall be included within the scope of protection of the disclosure.

## Claims

1. A method for sidelink communication, performed by a terminal device, the method comprising:
   sending or receiving a physical sidelink control channel (PSCCH), wherein the PSCCH is used to indicate a sending mode of a sidelink positioning reference signal (SL PRS), and a transmission resource of the PSCCH and/or a transmission mode of the PSCCH are/is related to a transmission resource of the SL PRS.

2. The method of claim 1, wherein the transmission resource of the PSCCH and/or the transmission mode of the PSCCH comprise/comprises an orthogonal covering code (OCC) of a demodulation reference signal (DMRS) of the PSCCH.

3. The method of claim 2, wherein the OCC of the DMRS of the PSCCH is related to the transmission resource of the SL PRS.

4. The method of claim 1, wherein the transmission resource of the PSCCH and/or the transmission mode of the PSCCH comprise/comprises a time-frequency position of a demodulation reference signal (DMRS) of the PSCCH.

5. The method of claim 4, wherein the time-frequency position of the DMRS of the PSCCH is related to the transmission resource of the SL PRS.

6. The method of any one of claims 2 to 5, wherein

   the terminal device cannot send a modulation symbol of the PSCCH on a time-frequency position that is available for sending the DMRS of the PSCCH; and/or
   a sending power of the DMRS of the PSCCH is greater than a sending power of the modulation symbol of the PSCCH.

7. The method of claim 1, wherein the transmission resource of the PSCCH and/or the transmission mode of the PSCCH comprise/comprises a frequency domain position of the PSCCH.

8. The method of claim 7, wherein the frequency domain position of the PSCCH is related to the transmission resource of the SL PRS.

9. The method of any one of claims 1 to 8, wherein the transmission resource of the SL PRS comprises a time domain position of the SL PRS and/or a frequency domain position of the SL PRS.

10. The method of claim 9, wherein the frequency domain position of the SL PRS is related to a resource element (RE) offset of the SL PRS.

11. The method of any one of claims 1 to 10, wherein the PSCCH and the SL PRS are located in neighboring orthogonal frequency division multiplexing (OFDM) symbols within a same slot.

12. The method of any one of claims 1 to 11, wherein a bandwidth occupied by the SL PRS is configured by a network, or pre-configured, or specified by a standard, or indicated by the PSCCH.

13. The method of any one of claims 1 to 12, wherein a bandwidth of the PSCCH is less than or equal to a bandwidth of the SL PRS.

14. The method of claim 13, wherein the bandwidth of the SL PRS comprises at least one subchannel, each sub-channel comprises at least one physical resource block (PRB) or interlaced resource block (IRB), and the bandwidth of the PSCCH is less than or equal to one sub-channel.

15. The method of claim 13, wherein the bandwidth of the PSCCH is equal to floor (B/Y), B is a number of PRBs or IRBs occupied by the SL PRS, or B is a number of PRBs or IRBs contained in a SL PRS resource pool, Y is a number of allowed RE offsets within a time domain resource of the SL PRS, and floor () represents rounding down to a nearest integer.

16. The method of any one of claims 1 to 15, wherein a sending power of the terminal device remains constant within one SL PRS time domain resource, and the one SL PRS time domain resource comprises a time domain resource occupied by the PSCCH and a time domain resource occupied by the SL PRS.

17. The method of claim 16, wherein the one SL PRS time domain resource further comprises a time domain resource occupied by an automatic gain control (AGC).

18. The method of any one of claims 1 to 17, wherein the transmission resource of the SL PRS is determined from a dedicated resource pool for the SL PRS.

19. The method of any one of claims 1 to 17, wherein the transmission resource of the SL PRS is determined from a shared resource pool for the SL PRS and SL communication.

20. The method of any one of claims 1 to 19, wherein the sending mode of the SL PRS comprises at least one of:

  one or more slots where the SL PRS is located;
  one or more orthogonal frequency division multiplexing (OFDM) symbols occupied by the SL PRS within its slot(s);
  PRBs or IRBs occupied by the SL PRS on its one or more OFDM symbols;
  resource elements (REs) occupied by the SL PRS on its one or more OFDM symbols;
  a repetition periodicity of the SL PRS;
  identification (ID) information of a receiving terminal of the SL PRS;
  ID information of a sending terminal of the SL PRS; or
  sequence information of the SL PRS.

21. An apparatus for sidelink communication, comprising:
  a transmission module, configured to send or receive a physical sidelink control channel (PSCCH), wherein the PSCCH is used to indicate a sending mode of a sidelink positioning reference signal (SL PRS), and a transmission resource of the PSCCH and/or a transmission mode of the PSCCH are/is related to a transmission resource of the SL PRS.

22. The apparatus of claim 21, wherein the transmission resource of the PSCCH and/or the transmission mode of the PSCCH comprise/comprises an orthogonal covering code (OCC) of a demodulation reference signal (DMRS) of the PSCCH.

23. The apparatus of claim 22, wherein the OCC of the DMRS of the PSCCH is related to the transmission resource of the SL PRS.

24. The apparatus of claim 21, wherein the transmission resource of the PSCCH and/or the transmission mode of the PSCCH comprise/comprises a time-frequency position of a demodulation reference signal (DMRS) of the PSCCH.

25. The apparatus of claim 24, wherein the time-frequency position of the DMRS of the PSCCH is related to the transmission resource of the SL PRS.

26. The apparatus of any one of claims 22 to 25, wherein

a modulation symbol of the PSCCH cannot be sent on a time-frequency position that is available for sending the DMRS of the PSCCH; and/or
a sending power of the DMRS of the PSCCH is greater than a sending power of the modulation symbol of the PSCCH.

27. The apparatus of claim 21, wherein the transmission resource of the PSCCH and/or the transmission mode of the PSCCH comprise/comprises a frequency domain position of the PSCCH.

28. The apparatus of claim 27, wherein the frequency domain position of the PSCCH is related to the transmission resource of the SL PRS.

29. The apparatus of any one of claims 21 to 28, wherein the transmission resource of the SL PRS comprises a time domain position of the SL PRS and/or a frequency domain position of the SL PRS.

30. The apparatus of claim 29, wherein the frequency domain position of the SL PRS is related to a resource element (RE) offset of the SL PRS.

31. The apparatus of any one of claims 21 to 30, wherein the PSCCH and the SL PRS are located in neighboring orthogonal frequency division multiplexing (OFDM) symbols within a same slot.

32. The apparatus of any one of claims 21 to 31, wherein a bandwidth occupied by the SL PRS is configured by a network, or pre-configured, or specified by a standard, or indicated by the PSCCH.

33. The apparatus of any one of claims 21 to 32, wherein a bandwidth of the PSCCH is less than or equal to a bandwidth of the SL PRS.

34. The apparatus of claim 33, wherein the bandwidth of the SL PRS comprises at least one subchannel, each sub-channel comprises at least one physical resource block (PRB) or interlaced resource block (IRB), and the bandwidth of the PSCCH is less than or equal to one sub-channel.

35. The apparatus of claim 33, wherein the bandwidth of the PSCCH is equal to floor (B/Y), B is a number of PRBs or IRBs occupied by the SL PRS, or B is a number of PRBs or IRBs contained in a SL PRS resource pool, Y is a number of allowed RE offsets within a time domain resource of the SL PRS, and floor () represents rounding down to a nearest integer.

36. The apparatus of any one of claims 21 to 35, wherein a sending power remains constant within one SL PRS time domain resource, and the one SL PRS time domain resource comprises a time domain resource occupied by the PSCCH and a time domain resource occupied by the SL PRS.

37. The apparatus of claim 36, wherein the one SL PRS time domain resource further comprises a time domain resource occupied by an automatic gain control (AGC).

38. The apparatus of any one of claims 21 to 37, wherein the transmission resource of the SL PRS is determined from a dedicated resource pool for the SL PRS.

39. The apparatus of any one of claims 21 to 37, wherein the transmission resource of the SL PRS is determined from a shared resource pool for the SL PRS and SL communication.

40. The apparatus of any one of claims 21 to 39, wherein the sending mode of the SL PRS comprises at least one of:

one or more slots where the SL PRS is located;
one or more orthogonal frequency division multiplexing (OFDM) symbols occupied by the SL PRS within its respective slot(s);
PRBs or IRBs occupied by the SL PRS on its one or more OFDM symbols;
resource elements (REs) occupied by the SL PRS on its one or more OFDM symbols;
a repetition periodicity of the SL PRS;
identification (ID) information of a receiving terminal of the SL PRS;
ID information of a sending terminal of the SL PRS; or
sequence information of the SL PRS.

41. A terminal device, comprising: a memory for storing a computer program; and a processor for executing the computer program to implement the method of any one of claims 1 to 20.

42. A computer-readable storage medium having stored thereon a computer program that when executed by a processor, implements the method of any one of claims 1 to 20.

43. A chip comprising programmable logic circuits and/or program instructions, wherein when the chip is in operation, the chip is used to implement the method of any one of claims 1 to 20.

44. A computer program product comprising computer instructions, wherein the computer instructions are stored in a computer-readable storage medium, and a processor reads the computer instructions from the computer-readable storage medium and executes the computer instructions to implement the method of any one of claims 1 to 20.

**FIG. 1**

PSCCH    PSSCH    PSFCH    GP    Symbols not available for a sidelink

**FIG. 2**

FIG. 3

FIG. 4

FIG. 5

PSCCH frequency domain resource indication

Size of sub-channel

PSCCH

PSSCH

Number of sub-channels = 3

PSCCH

PSSCH

PSCCH

PSSCH

$f$

$t$

Index of initial RB of sub-channel

**FIG. 6**

|←————Slot 0————→|←————Slot 1————→|

☐ Downlink symbol  ☐ Flexible symbol  ■ Uplink symbol

**FIG. 7**

Comb size = 2,
RE offset = 0

Comb size = 2,
RE offset = 1

**FIG. 8**

IRB 0     IRB 1

**FIG. 9**

**FIG. 10**

60 MHz carrier bandwidth

**FIG. 11**

1210

A terminal device sends or receives a PSCCH. The PSCCH is used to indicate a sending mode of an SL PRS, and a transmission resource and/or a transmission mode of the PSCCH are/is related to a transmission resource of the SL PRS

**FIG. 12**

SL PRS time domain resource

Frequency

| AGC | PSCCH | SL PRS | SL PRS |

| Symbol #i | Symbol #i+1 | Symbol #i+2 | Symbol #i+3 |

PSCCH and the indicated SL PRS occupy the same bandwidth

SL PRS time domain resource

SL PRS

| AGC | PSCCH | SL PRS | SL PRS |

| Symbol #i | Symbol #i+1 | Symbol #i+2 | Symbol #i+3 |

The bandwidth occupied by the PSCCH is less than the bandwidth occupied by the indicated SL PRS

**FIG. 13**

RE#0 RE#1 RE#2 RE#3 RE#4 RE#5 RE#6 RE#7 RE#8 RE#9 RE#10 RE#11

OFDM Symbol #i

DMRS    DMRS    DMRS

Frequency

**FIG. 14**

**FIG. 15**

**FIG. 16**

**FIG. 17**

| | AGC | | PSCCH | | SL PRS | | Sending-receiving switching symbol |

**FIG. 18**

*sl-StartSymbol*

*sl-LengthSymbols*

The PSCCH indicating the SL PRS with the RE offset #1 (sub-channel #1 in the SL PRS resource)

The PSCCH indicating the SL PRS with the RE offset #0 (sub-channel #0 in the SL PRS resource)

SL PRS resource

Frequency

0  1  2  3  4  5  6  7  8  9  10  11  12  13

Time

▨ AGC     ▨ PSCCH     ▨ SL PRS     ☐ Sending-receiving switching symbol

**FIG. 19**

Transmission module — 2010     2000

**FIG. 20**

Terminal device 2100

Processor 2101

Memory 2103

Transceiver 2102

Wireless communication chip

Radio frequency antenna

Wireless communication component

**FIG. 21**

## INTERNATIONAL SEARCH REPORT

International application No.

**PCT/CN2023/076452**

### A. CLASSIFICATION OF SUBJECT MATTER

H04W64/00(2009.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT; ENTXT; ENTXTC; WPABS; WPABSC; CJFD; 3GPP; CNKI: 侧行, 侧链路, 旁路, 旁链路, 边链路, 直通链路, 定位参考信号, 物理侧行控制信道, 指示, 带宽, SL, sidelink, PRS, SL-PRS, S-PRS, PSCCH, DMRS, indicat+, bandwidth

### C. DOCUMENTS CONSIDERED TO BE RELEVANT

| Category* | Citation of document, with indication, where appropriate, of the relevant passages | Relevant to claim No. |
|---|---|---|
| X | INTEL CORPORATION. "3GPP TSG RAN WG1 #109-e, R1-2204940" *Views on Potential Solutions for SL Positioning*, 30 April 2022 (2022-04-30), sections 1-7 | 1-14, 16-34, 36-44 |
| A | CN 114339987 A (SPREADTRUM COMMUNICATIONS (SHANGHAI) CO., LTD.) 12 April 2022 (2022-04-12) entire document | 1-44 |
| A | CN 115225227 A (DATANG MOBILE COMMUNICATIONS EQUIPMENT CO., LTD.) 21 October 2022 (2022-10-21) entire document | 1-44 |
| A | EP 4068810 A1 (DATANG MOBILE COMMUNICATIONS EQUIPMENT CO., LTD.) 05 October 2022 (2022-10-05) entire document | 1-44 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 November 2023** | **03 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/076452**

| Patent document cited in search report | | | Publication date (day/month/year) | Patent family member(s) | | | Publication date (day/month/year) |
|---|---|---|---|---|---|---|---|
| CN | 114339987 | A | 12 April 2022 | None | | | |
| CN | 115225227 | A | 21 October 2022 | None | | | |
| EP | 4068810 | A1 | 05 October 2022 | EP | 4068810 | A4 | 11 January 2023 |
| | | | | US | 2023048608 | A1 | 16 February 2023 |
| | | | | WO | 2021121058 | A1 | 24 June 2021 |

Form PCT/ISA/210 (patent family annex) (July 2022)